# EUROPEAN PATENT APPLICATION

(11) **EP 2 620 786 A2**
(43) Date of publication of application: **31.07.2013**
(21) Application number: 13000294.2
(22) Date of filing: 21.01.2013
(51) Int. Cl.: G01S 13/58, G01S 13/86, G01S 13/93, H01Q 21/06, G01S 13/18

(54) **Vehicle collision risk prediction apparatus**

(30) Priority: 30.01.2012 JP 2012016087
(71) Applicant: Hitachi Consumer Electronics Co. Ltd., Tokyo 100-0004 (JP)
(72) Inventor: Ishihara, Tomokazu, Tokyo, 100-8220 (JP); Nishizawa, Akihito, Tokyo, 100-8220 (JP); Shiokawa, Junji, Tokyo, 100-8220 (JP)
(74) Representative: Strehl Schübel-Hopf & Partner

(57) **Abstract**

A vehicle risk prediction apparatus includes: a first imaging unit that detects an electromagnetic wave of a wavelength ranging from a millimeter wave to a submillimeter wave to output a first image; a first detection unit that processes the first image output from the first imaging unit to detect a given object; and a risk prediction unit that outputs a detection result of the given object detected by the first detection unit. The first imaging unit includes: a transmit antenna unit that radiates the electromagnetic wave of the wavelength ranging from the millimeter wave to the submillimeter wave; a receive antenna array unit that has a plurality of receive antenna units arranged two-dimensionally, and receives a reflected wave of the electromagnetic wave radiated by the transmit antenna unit from the given object; and a signal processing unit that measures a time from radiation of the electromagnetic wave by the transmit antenna unit to reception of the reflected wave by the receive antenna array unit according to the number of read frames by the receive antenna array, and calculates both or any one of a distance from the subject vehicle to the given object, and a relative speed between the subject vehicle and the given object.

## Description

### TECHNICAL FIELD

The present invention relates to a vehicle collision risk prediction apparatus.

Japanese Unexamined Patent Application Publication No. 2000-172980 discloses a related art of this technical field. This publication discloses "a method for detecting an obstruction on a road with the use of a millimeter-wave sensor installed on a road side in which an obstruction candidate is detected according to a difference between measurement data obtained by scanning with the millimeter-wave sensor, and background data having no obstruction, and the presence of the obstruction is detected if the obstruction candidate is always present as a result of repeating the detection" (refer to abstract of this publication).

### SUMMARY

In driving of the vehicle, when an object unexpected by a driver suddenly appears at a close range in a traveling direction of the vehicle, a collision is liable to occur. For example, at a blind curve or an intersection with street trees, the driver cannot visibly recognize the object having the potentiability of collision such as persons, animals, automobile, bikes, or bicycles in advance, and starts an action for avoiding collision such as braking or turning a steering wheel after the driver could visually recognize the object at the close range. As a result, it is too late for avoidance of the collision, resulting in an accident.

As described above, Japanese Unexamined Patent Application Publication No. 2000-172980 discloses a related art of this technical field. This publication discloses "a method for detecting an obstruction on a road with the use of a millimeter-wave sensor installed on a road side in which an obstruction candidate is detected according to a difference between measurement data obtained by scanning with the millimeter-wave sensor, and background data having no obstruction, and the presence of the obstruction is detected if the obstruction candidate is always present as a result of repeating the detection". However, the device disclosed in Japanese Unexamined Patent Application Publication No. 2000-172980 needs to be installed on the road side in advance, resulting in a problem that the accident cannot be reduced in roads where the device is not installed.

Under the circumstances, the present invention has been made to solve the above problems, and therefore aims at providing a device that can be installed in a subject vehicle, can detect information on an object with the potentiability of collision which is located, for example, at a blind area of the driver, and can contribute to collision accident avoidance.

The typical outline of the invention disclosed in the present application will be described in brief below.
(1) A vehicle risk prediction apparatus including: a first imaging unit that detects an electromagnetic wave of a wavelength ranging from a millimeter wave to a submillimeter wave to output a first image; a first detection unit that processes the first image output from the first imaging unit to detect a given object; and a risk prediction unit that outputs a detection result of the given object detected by the first detection unit, in which the first imaging unit includes a transmit antenna unit that radiates the electromagnetic wave of the wavelength ranging from the millimeter wave to the submillimeter wave; a receive antenna array unit that has a plurality of receive antenna units arranged two-dimensionally, and receives a reflected wave of the electromagnetic wave radiated by the transmit antenna unit from the given object; and a signal processing unit that measures a time from radiation of the electromagnetic wave by the transmit antenna unit to reception of the reflected wave by the receive antenna array unit according to the number of read frames by the receive antenna array, and calculates both or any one of a distance from the subject vehicle to the given object, and a relative speed between the subject vehicle and the given object.
(2) The vehicle risk prediction apparatus according to the item (1) in which the signal processing unit further calculates a place of the given object on the basis of two-dimensional positions of the respective receive antenna units of the receive antenna array, which receive the reflected wave.

According to the present invention, there can be provided the device that can be installed in a subject vehicle, can detect information on an object with the potentiability of collision which is located, for example, at a blind area of the driver, and can contribute to collision accident avoidance.

### BRIEF DESCRIPTION OF THE DRAWINGS

FIG. 1 is a configuration diagram illustrating a vehicle collision risk prediction system according to a first embodiment of the present invention;
FIG. 2 is a diagram illustrating an example of an output image of a visible light imaging unit according to the first to eighth embodiments of the present invention;
FIG. 3 is a diagram illustrating an example of the output image of the visible light imaging unit according to the first, third, fourth, sixth, seventh, and eighth embodiments of the present invention;
FIG. 4 is a diagram illustrating an example of a collision risk object determination algorithm in a first detection unit according to the first, third, fourth, sixth, seventh, and eighth embodiments of the present invention;
FIG. 5 is a diagram illustrating an example of the output image of an image synthesis unit according to the first, third, seventh, and eighth embodiments of the present invention;
FIG. 6 is a configuration diagram illustrating a vehicle collision prediction system according to a second embodiment of the present invention;
FIG. 7 is a diagram illustrating an example of an output image of a millimeter-wave imaging unit according to the second and fifth embodiments of the present invention;
FIG. 8 is a diagram illustrating an example of the output image of an image synthesis unit according to the second and fifth embodiments of the present invention;
FIG. 9 is a configuration diagram illustrating a vehicle collision prediction system according to a third embodiment of the present invention;
FIG. 10 is a diagram illustrating a method of time sharing control in an imaging method according to the third and fifth embodiments of the present invention;
FIG. 11 is a configuration diagram illustrating a vehicle collision prediction system according to a fourth embodiment of the present invention;
FIG. 12 is a diagram illustrating an example of a collision risk object determination algorithm in a second detection unit according to the fourth, fifth, sixth, and eighth embodiments of the present invention;
FIG. 13 is a diagram illustrating an example of the output image of an image synthesis unit according to the fourth and sixth embodiments of the present invention;
FIG. 14 is a configuration diagram illustrating a vehicle collision prediction system according to a fifth embodiment of the present invention;
FIG. 15 is a configuration diagram illustrating a vehicle collision prediction system according to a sixth embodiment of the present invention;
FIG. 16 is a configuration diagram illustrating a vehicle collision avoidance system according to the seventh and eighth embodiments of the present invention;
FIG. 17 is a diagram illustrating an example of a collision avoidance object determination algorithm in the first detection unit according to the seventh and eighth embodiments of the present invention;
FIG. 18 is a diagram illustrating an example of a collision avoidance object determination algorithm in the second detection unit according to the eighth embodiment of the present invention;
FIG. 19 is a diagram illustrating an example of the collision avoidance object determination algorithm in the second detection unit according to the eighth embodiment of the present invention;
FIG. 20 is a configuration diagram illustrating a receive antenna array according to a ninth embodiment of the present invention;
FIG. 21 is a diagram illustrating an example of a position of pixels outputting distance information and relative speed information from a millimeter wave imaging unit according to the ninth embodiment of the present invention;
FIG. 22 is a diagram illustrating an example of an operation timing of the receive antenna array according to the ninth embodiment of the present invention;
FIG. 23 is a diagram illustrating an example of an operation timing of a millimeter wave imaging unit according to the ninth embodiment of the present invention;
FIG. 24 is a diagram illustrating an example of positions of pixels outputting distance information and relative speed information from a millimeter wave imaging unit according to a tenth embodiment of the present invention;
FIG. 25 is a diagram illustrating an example of positions of pixels outputting distance information and relative speed information from a millimeter wave imaging unit according to an eleventh embodiment of the present invention;
FIG. 26 is a diagram illustrating an example of an operation timing of a receive antenna array according to the eleventh embodiment of the present invention;
FIG. 27 is a diagram illustrating an example of positions of pixels outputting distance information and relative speed information from a millimeter wave imaging unit according to the eleventh embodiment of the present invention;
FIG. 28 is a flowchart illustrating a method of a gradual distance and relative speed calculation according to the eleventh embodiment of the present invention;
FIG. 29 is a configuration diagram illustrating a vehicle collision risk avoidance system according to a twelfth of the present invention; and
FIG. 30 is a configuration diagram illustrating the millimeter wave imaging unit according to the ninth embodiment of the present invention.

### DETAILED DESCRIPTION

Hereinafter, embodiments of the present invention will be described with reference to the accompanying drawings.

### First Embodiment

Hereinafter, a first embodiment of the present invention will be described in detail.

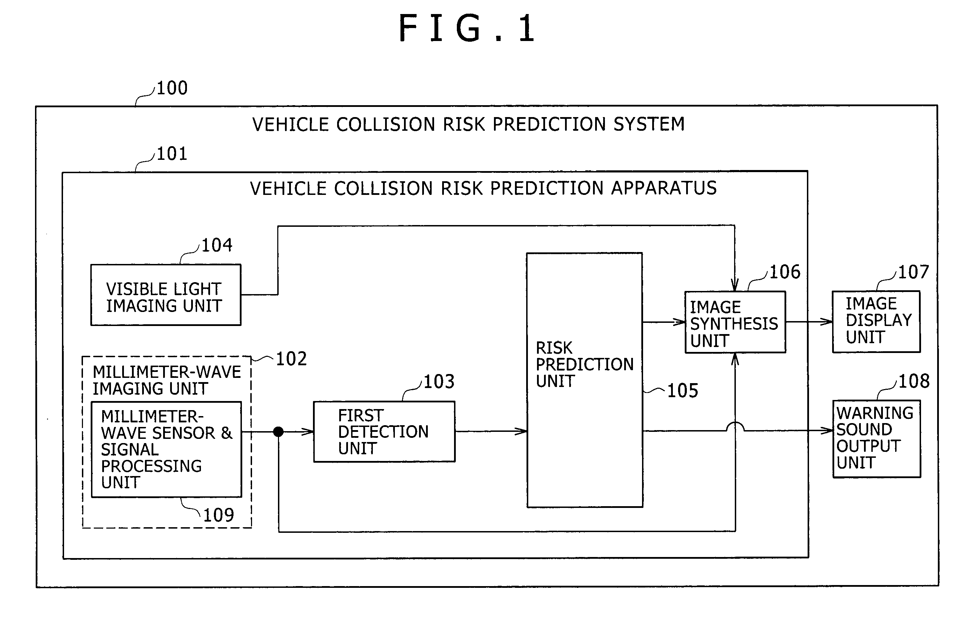

FIG. 1 is a configuration diagram illustrating a vehicle collision risk prediction system 100 according to a first embodiment of the present invention, which illustrates a configuration example in which a vehicle collision risk prediction apparatus 101 of the present invention is applied to the vehicle collision risk prediction system 100.

The vehicle collision risk prediction system 100 is configured by a system that is mounted on a vehicle, and detects a risk of collision in a vehicle periphery (for example, a front direction) so as to give a warning to a driver.

The vehicle collision risk prediction system 100 appropriately includes the vehicle collision risk prediction apparatus 101, an image display unit 107, and a warning sound output unit 108.

The vehicle collision risk prediction apparatus 101 is configured by a system that is mounted on the vehicle, detects the risk of collision in the vehicle periphery (for example, the front direction), and outputs a synthetic image and a sound signal for giving a warning to the driver. The vehicle collision risk prediction apparatus 101 appropriately includes a millimeter wave imaging unit 102, a first detection unit 103, a visible light imaging unit 104, a risk prediction unit 105, and an image synthesis unit 106.

The millimeter wave imaging unit 102 includes a millimeter wave sensor & signal processing unit 109.

The millimeter wave sensor & signal processing unit 109 images an electromagnetic wave of a wavelength ranging from a millimeter wave band to a submillimeter wave band (wavelength ranges from about several tens µm to about 1 cm), and outputs an output image which is two-dimensional digital data to the first detection unit 103 and the image synthesis unit 106. In general, the electromagnetic wave of the wavelength ranging from the millimeter wave band to the submillimeter wave band (wavelength ranges from about several tens µm to about 1 cm) has a property that an object made of a certain kind of material transmits such an electromagnetic wave. For that reason, the millimeter wave sensor & signal processing unit 109 can image a configuration of the object located at a position which is hidden behind an obstruction and cannot be viewed

The first detection unit 103 extracts an object configuration of a living object such as a person or an animal, or a vehicle such as an automobile, a bike, or a bicycle, from the output image of the millimeter wave imaging unit 102. The first detection unit 103 also determines a travel speed of the object, and a trend of the travel. When the first detection unit 103 determines that there is a risk that the object (hereinafter, collision risk object) collides with the subject vehicle, the first detection unit 103 outputs collision risk object information indicative of a size of the collision risk object on an image, and position information to the risk prediction unit 105. An example of a method of determining the collision risk object will be described later.

The visible light imaging unit 104 images an electromagnetic wave of a wavelength ranging from an ultraviolet band to a near-infrared band (wavelength ranges from about 10 nm to about several µm) including a visible light, and outputs a second image which is two-dimensional digital data to the image synthesis unit 106.

The risk prediction unit 105 outputs the collision risk object information output from the first detection unit 103 to the image synthesis unit 106. Also, the risk prediction unit 105 determines contents about which the driver is warned with a warning sound such as an alarm sound or a synthetic voice, on the basis of the collision risk object information output from the first detection unit 103. The risk prediction unit 105 then converts the determined contents into a sound signal, and outputs the sound signal to the warning sound output unit 108.

The image display unit 107 clips an image at the position of the collision risk object from the output image of the millimeter wave imaging unit 102 on the basis of the collision risk object information output from the risk prediction unit 105. The image display unit 107 then outputs a synthetic image in which the clipped image is superimposed on the output image of the visible light imaging unit 104 to the image display unit 107.

The warning sound output unit 108 pronounces on the basis of the sound signal output from the risk prediction unit 105, and gives a warning to the driver with a sound.

With the above configuration, the collision risk object located behind the obstruction can be detected by the millimeter wave imaging unit 102 and the first detection unit 103. The driver is warmed by the synthetic image and the sound to promote a collision avoidance action with the result that a collision accident can be obviated. The driver may be warmed with only one of the sound and the image, or a time lag may be provided so that the sound is first output, and the image is output after a given time has been elapsed. Also, those warning may be notified the driver of while the warning is gradually changed according to a distance between the subject vehicle and the collision risk object.

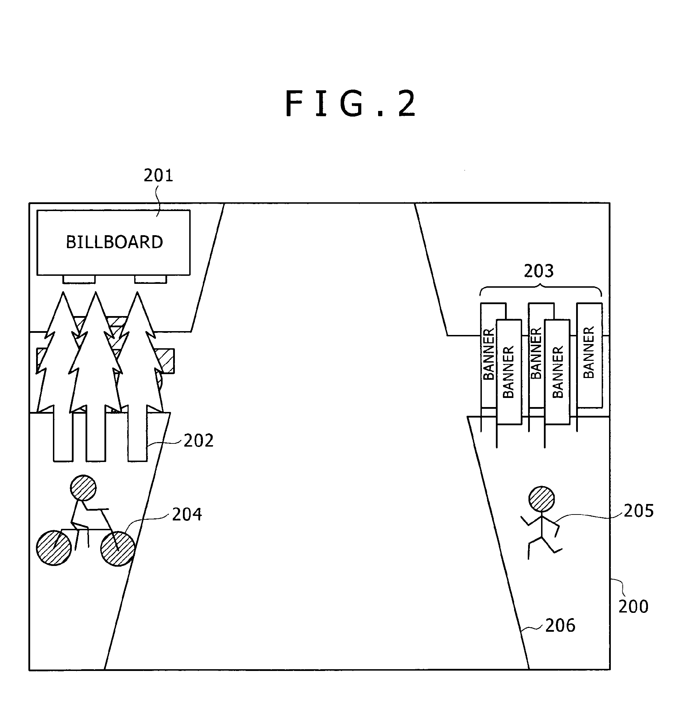

FIG. 2 is a diagram illustrating an example of the output image of the visible light imaging unit 104. FIG. 2 illustrates a case in which the visible light imaging unit 104 is installed to take an image ahead of the subject vehicle. The electromagnetic wave used for imaging has any wavelength ranging from the ultraviolet rays to the near-infrared band (wavelength ranges from about 10 nm to about several µm) including a visible light. For example, when imaging is conduct with the visible light, an image in a range visible by person's eyes can be imaged. Also, when imaging is conducted with the near-infrared rays, a configuration of the object can be imaged with high sensitivity even during the night. For that reason, for example, the electromagnetic wave used for imaging may be appropriately automatically switched on the basis of the quantity of light detected by an illuminator sensor, or sundown information, position information, or weather information obtained with the connection with a network, or may be manually switched by the driver.

As illustrated in FIG. 2, for example, it is assumed that three obstructions (billboard 201, street trees 202, and banners 203) are present ahead of the subject vehicle. The billboard 201 is made of wood, the street trees 202 are made of wood, and the banners 203 are made of cloth and plastic. Since the driver can visually recognize only the visible light, the driver can visually recognize a bicycle 204 and a pedestrian 205, but cannot visually recognize the collision risk object present behind the obstruction in advance.

For that reason, if the device of the present invention is not used, when the collision risk object suddenly bursts out from behind of the obstruction, it is too late for a collision avoidance action such as braking or handling, thereby leading to the possibility of an accident.

Under the circumstances, there is a need to obviate the collision accident by detecting the collision risk object in advance, warning the driver, and allowing the driver to take the collision avoidance action, even if the collision risk object is present behind the obstruction. To achieve this action, in the first embodiment, the imaging is conducted with the electromagnetic wave ranging from the millimeter wave band to the submillimeter wave band (wavelength ranges from about several tens µm to about 1 cm). The electromagnetic wave of this wavelength band has a property that this electromagnetic wave is transmitted through a variety of materials such as wood, plastic, cloth, paper, ceramic, cardboard, smoke, and fog except for water and metal, reflected on a metal surface, and also absorbed by an object containing a large amount of moisture such as a person or an animal. That is, if the obstruction is made of a material that transmits the electromagnetic wave of this wavelength band, an image seeing through behind of the obstruction can be obtained by the millimeter wave imaging unit 102.

In general, the imaging method is classified into two types of a passive type and an active type depending on the kind of a light source (radiation source) of the electromagnetic wave. The passive type is an imaging method having the electromagnetic wave ranging from the millimeter wave band to the submillimeter wave band (wavelength ranges from about several tens µm to about 1 cm), which is naturally radiated from an object having a heat as the light source. On the other hand, the active type is an imaging method in which an object to be imaged is illuminated with a light source installed in the subject vehicle, and the electromagnetic wave reflected by a maternal such as metal can be sharply imaged more than that in the passive type.

In the first embodiment, imaging is conducted by the imaging method of the passive type. For that reason, the pedestrian, the animal, and the traveling vehicle (particularly, engine), which are the objects having a heat, can be detected.

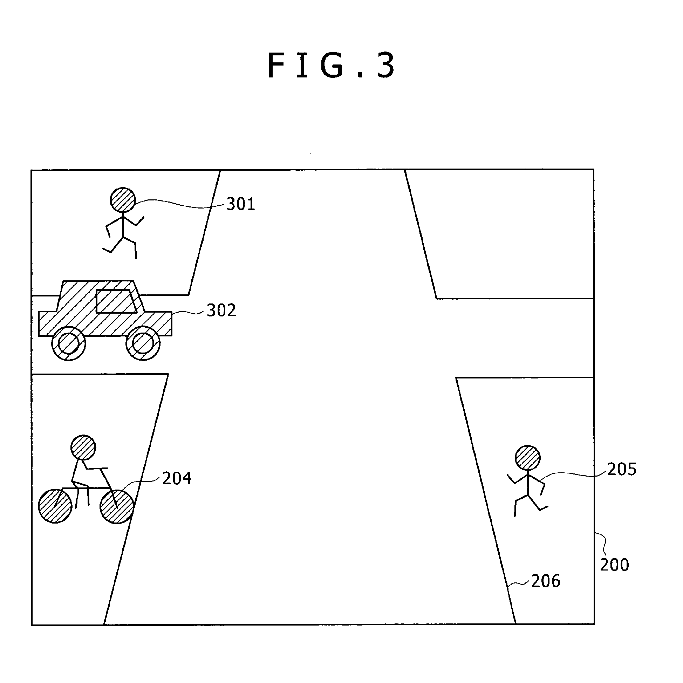

FIG. 3 is a diagram illustrating an example of the output image of the millimeter wave imaging unit 102. In the first embodiment, since the imaging method of the passive type is applied, the electromagnetic wave is transmitted through the obstruction made of various materials other than water and metal to detect the object having the heat such as the person, the animal, or the traveling vehicle. For example, in FIG. 3, a pedestrian 301 and an automobile 302, which are present behind the obstruction, can be also detected other than the bicycle 204 and the pedestrian 205 which can be detected by the visible light imaging unit 104.

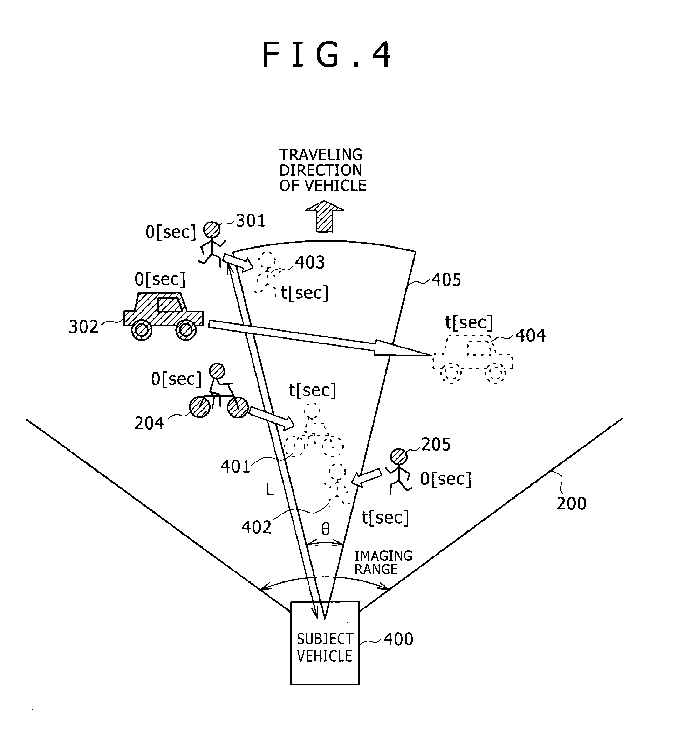

An example of the method for determining the collision risk object in the first detection unit 103 will be described with reference to FIG. 4. First, the object configuration of the living object such as the person or the animal, or the vehicle such as the automobile, the bike, or the bicycle is extracted from the output image of the millimeter wave imaging unit 102. Also, a predicted traveling direction and speed of the object are calculated by image processing according to the output images temporally continuously taken to predict the motion of the object. When it is determined that the object potentially passes through an area falling within a yaw angle θ[°] (for example: θ=10) and within a distance L[m] (for example: L=10) in the forward direction of the subject vehicle, and within a time t[sec] (for example: t=2), the object is determined as the collision risk object. In this case, the collision risk object information indicative of the size and the position information of the collision risk object on the image is output.

For example, in a case of FIG. 4, the object configurations of the objects (bicycle 204, pedestrian 205, pedestrian 301, and automobile 302) present within an imaging range 200 are extracted. Then, predicted positions (401, 402, 403, 403, and 404) after t[sec], and predicted travel loci (outline arrows in FIG. 4) between 0[sec] and t[sec] are predicted for the respective objects. The objects whose predicted travel loci pass through a range 405 illustrated in FIG. 4 are determined as the collision risk objects. For example, in the case of FIG. 4, the bicycle 204, the pedestrian 205, the pedestrian 301, and the automobile 302 are determined as the collision risk objects. In the prediction of the predicted travel loci, map information and traffic jam information acquired through a network may be used as complementary information.

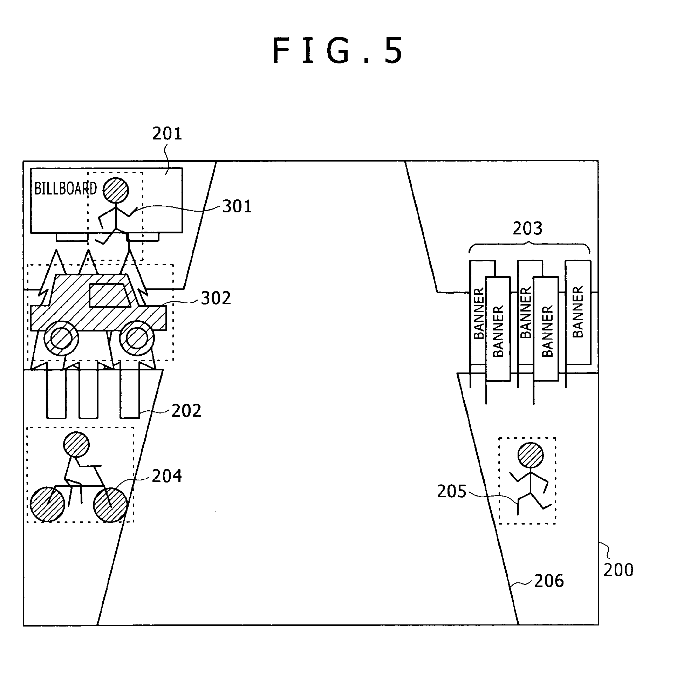

FIG. 5 is a diagram illustrating an example of the output image of the image synthesis unit 106. The objects determined as the collision risk objects are clipped along the configurations of the objects from the output image of the millimeter wave imaging unit 102, and superimposed on the output image of the visible light imaging unit 104. Further, markers each indicative of a risk as indicated by dotted rectangular lines in FIG. 5 are added to the peripheries of the respective collision risk objects through the image processing. A synthetic image of this type is provided to the driver through an image display unit. The driver can know the collision risk objects present behind the obstruction with the help of the synthetic image.

As described above, with the use of the configuration according to the first embodiment, the collision risk objects present behind the objection can be detected by the millimeter wave imaging unit 102 and the first detection unit 103, and the driver is warned by the image and the sound to facilitate the collision avoidance action, to thereby obviate the collision accident. The example in which the front of the subject vehicle is imaged is described. However, the present invention is not limited to this configuration, but it is needless to say that when the subject vehicle is backed, the present invention is applicable in the same manner while the back of the subject vehicle is imaged. Also, a direction of the imaging range may be appropriately changed, for example, according to the operation of a direction indicator of the subject vehicle. Also, modified examples described in the first embodiment can be also appropriately applied to other embodiments.

### Second Embodiment

Hereinafter, a second embodiment of the present invention will be described in detail.

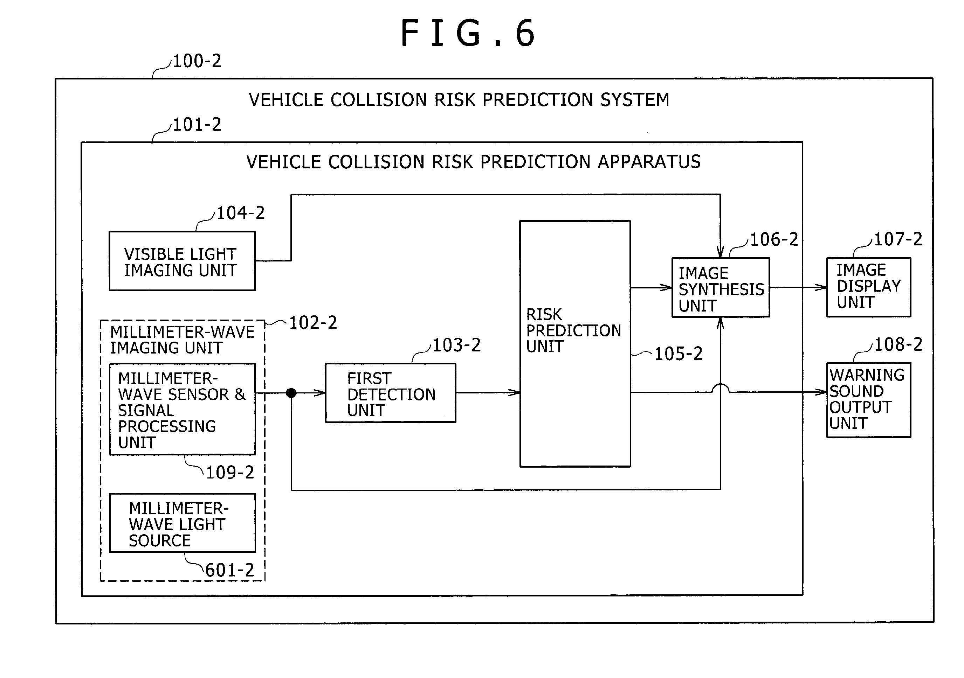

FIG. 6 is a configuration diagram illustrating a vehicle collision risk prediction system 100-2 according to a second embodiment of the present invention, which illustrates a configuration example of a case in which a vehicle collision risk prediction apparatus 101-2 according to the present invention is applied to the vehicle collision risk prediction system 100-2.

The vehicle collision risk prediction apparatus 101 appropriately includes a millimeter wave imaging unit 102-2, a first detection unit 103-2, a visible light imaging unit 104-2, a risk prediction unit 105-2, and an image synthesis unit 106-2. The millimeter wave imaging unit 102-2 includes a millimeter wave sensor & signal processing unit 109-2 and a millimeter wave source 601-2.

The millimeter wave source 601-2 is configured by a light source (radiation source) that can radiate the electromagnetic wave (wavelength ranges from about several tens µm to about 1 cm), which can be imaged by the millimeter wave sensor & signal processing unit 109-2, in the periphery of the subject vehicle to be photographed. The other constituent elements are identical with those in the first embodiment illustrated in FIG. 1, and therefore a description thereof will be omitted.

The second embodiment is different from the first embodiment in that the millimeter wave sensor & signal processing unit 109-2 and the millimeter wave source 601-2 are combined together in the imaging method of the active type.

In the second embodiment, since the imaging method of the active type is applied, the vehicle such as the automobile, the bikes, or the bicycles, which are objects covered with metal can be sharply imaged more than that in the imaging method of the passive type. As a result, a detection precision in the risk object, and a sharpness of the synthetic image provided to the driver are improved.

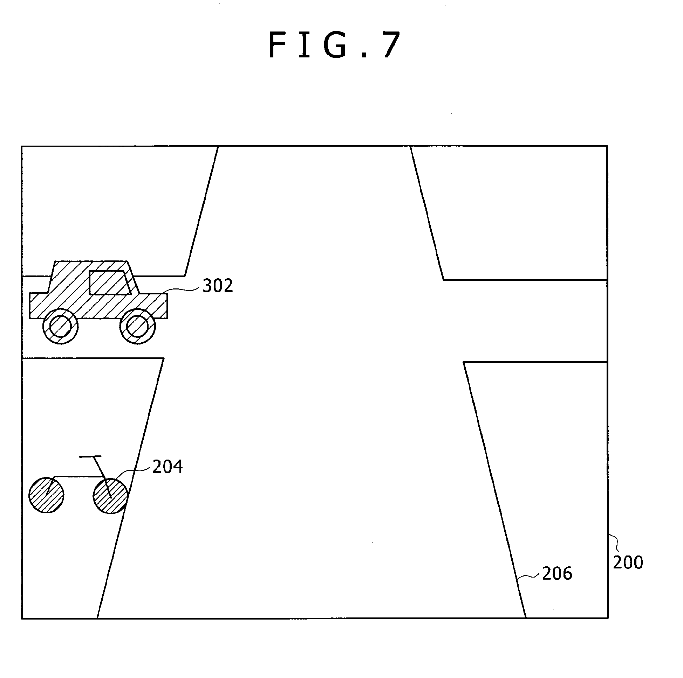

FIG. 7 is a diagram illustrating an example of an output image of the millimeter-wave imaging unit 102-2 when the same scene as that in FIG. 3 is imaged by the imaging method (active type) of the second embodiment. In this example, the bicycle 204 and the automobile 302, which are made of metal, can be sharply imaged more than those in the imaging method (passive type) of the first embodiment.

Since the image sharply imaged is used, the detection precision of the collision risk object in the first detection unit 103-2 is higher than that in the first embodiment.

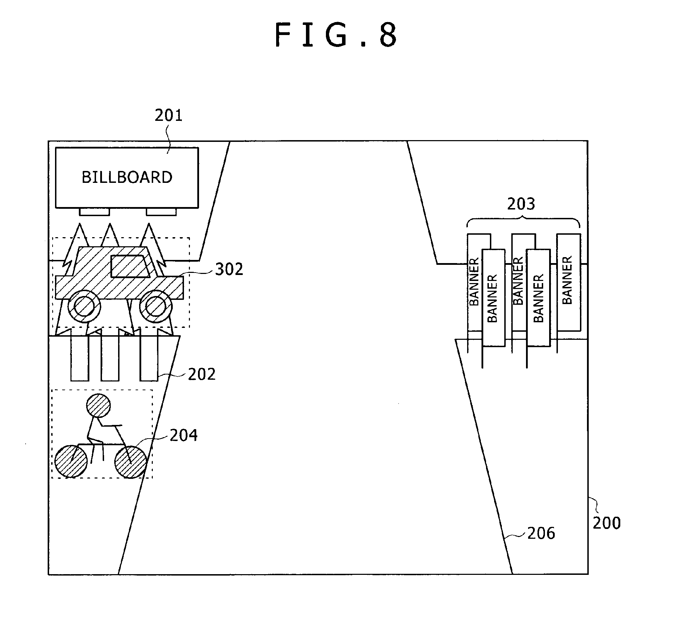

FIG. 8 is a diagram illustrating an example of the output image of the image synthesis unit 106-2. A method of generating the synthetic image is identical with that in the first embodiment, and therefore a description thereof will be omitted. In this example, the bicycle 204 and the automobile 302, which are made of metal, are sharply imaged more than those in the imaging method (passive type) of the first embodiment, and provided to the driver.

As described above, with the use of the configuration according to the second embodiment, the collision risk objects present behind the obstruction can be detected by the millimeter wave imaging unit 102 with high precision, and the driver can be warned with the provision of the captured sharp image. As a result, since the driver can more property take the collision avoidance action, the collision accident can be obviated.

### Third Embodiment

Hereinafter, a third embodiment of the present invention will be described in detail.

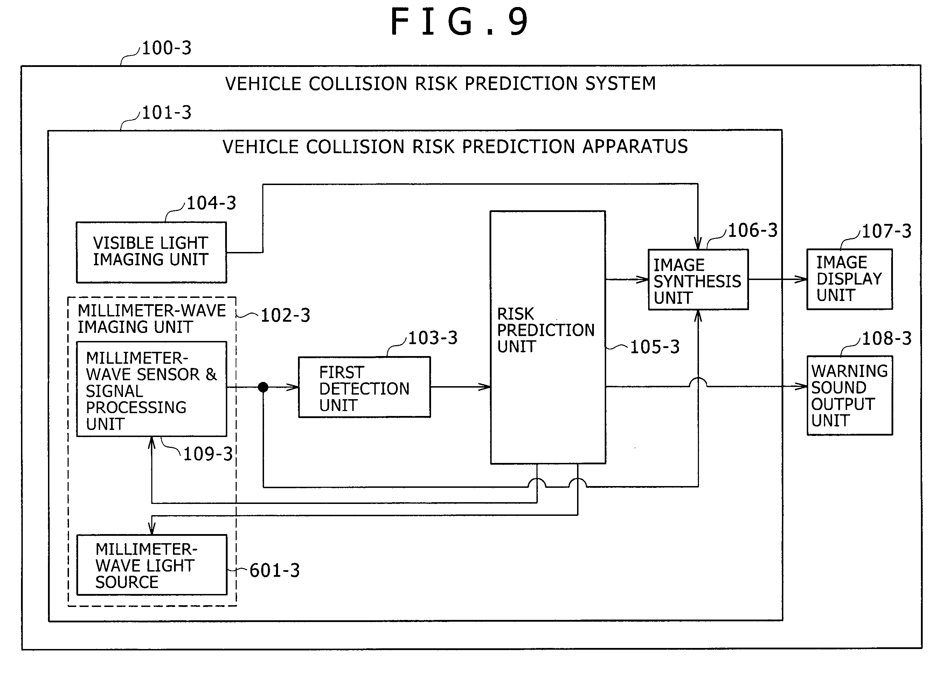

FIG. 9 is a configuration diagram illustrating a vehicle collision risk prediction system 100-3 according to the third embodiment of the present invention, which illustrates a configuration example in which a vehicle collision risk prediction apparatus 101-3 according to the present invention is applied to the vehicle collision risk prediction system 100-3.

The vehicle collision risk prediction apparatus 101-3 appropriately includes a millimeter wave imaging unit 102-3, a first detection unit 103-3, a visible light imaging unit 104-3, a risk prediction unit 105-3, and an image synthesis unit 106-3. The millimeter wave imaging unit 102-3 includes a millimeter wave sensor & signal processing unit 109-3 and a millimeter wave source 601-3.

The risk prediction unit 105-3 implements the same processing as that of the risk prediction unit 105-2 in the second embodiment. Further, the risk prediction unit 105-3 outputs a control signal for controlling an imaging parameter of the millimeter wave imaging unit 102-3 to the millimeter wave imaging unit 102-3. Also, the risk prediction unit 105-3 outputs a control signal for switching on (light on)/ off (light off) the millimeter wave source 601-3 to the millimeter wave source 601-3 on the basis of a switch unit not shown. The other constituent elements are identical with those in the second embodiment illustrated in FIG. 6, and therefore a description thereof will be omitted.

The third embodiment is different from the first and second embodiments in that the imaging method is switched by time sharing, and both the imaging methods of the passive type and the active type are switched by time sharing for imaging. In the third embodiment, both of detection results of those two imaging methods can be used under the time sharing control. This can realize both of an action for enhancing the detection precision of the object made of metal such as the vehicle by imaging of the active type, and an action for enabling the detection of the pedestrian or the animal by imaging of the passive type, at the same time.

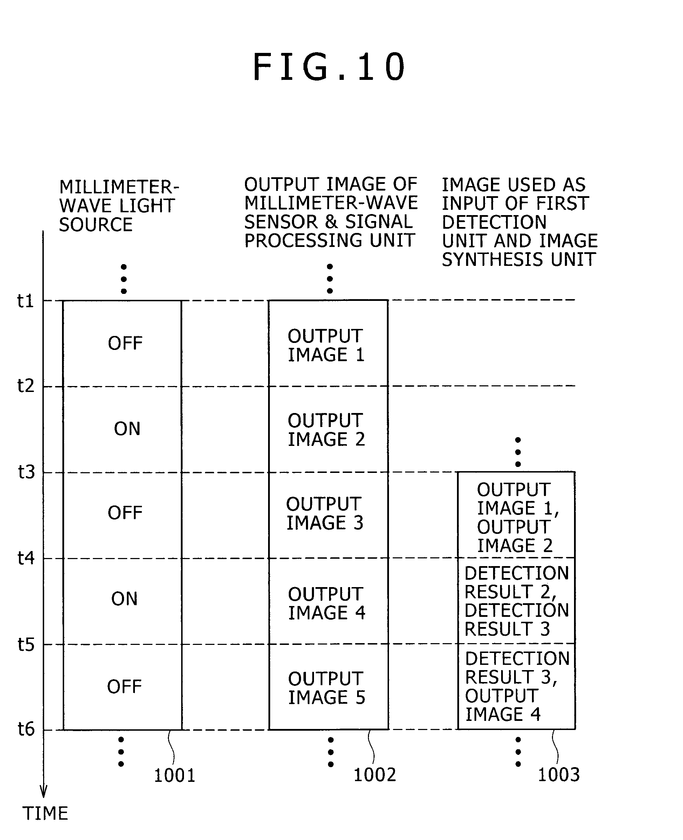

FIG. 10 is a diagram illustrating an example of a control timing of the time sharing control. The risk prediction unit 105 controls the millimeter wave source 601-2 to turn off at time t1 to t2, turn on at t2 to t3 so as to blink the millimeter wave source 601-2. The imaging method of the passive type is applied in a period where the millimeter wave source 601-2 is off whereas the imaging method of the active type is applied in a period where the millimeter wave source 601-2 is on. In the case of FIG. 10, output images 1, 3, and 5 are captured by the imaging method of the passive type, and output images 2 and 4 are captured by the imaging method of the active type. Since the sensitivity and the S/N ratio are different depending on the imaging method, imaging parameters such as an aperture, a shutter speed, and a noise removal signal processing intensity are different in optimum values between the respective imaging methods. Under the circumstances, the risk prediction unit 105-3 outputs an imaging parameter control signal to the millimeter wave sensor & signal processing unit 109-3 so as to set optimum imaging parameters in time with a change of the imaging method.

The first detection unit 103-3 detects the respective collision risk objects in the output image captured by the imaging method of the passive type and the output image captured by the imaging method of the active type, and matches both results of the active type and the passive type. The first detection unit 103-3 then outputs the collision risk object information on the collision risk object detected by at least any one imaging method to the risk prediction unit 105-3.

Thus, with the use of the configuration according to the third embodiment, both of the detection results in the two imaging methods can be used. This can realize both of the action for enhancing the detection precision of the object made of metal such as the vehicle by imaging of the active type, and the action for enabling the detection of the pedestrian or the animal by imaging of the passive type, at the same time.

### Fourth Embodiment

Hereinafter, a fourth embodiment of the present invention will be described in detail.

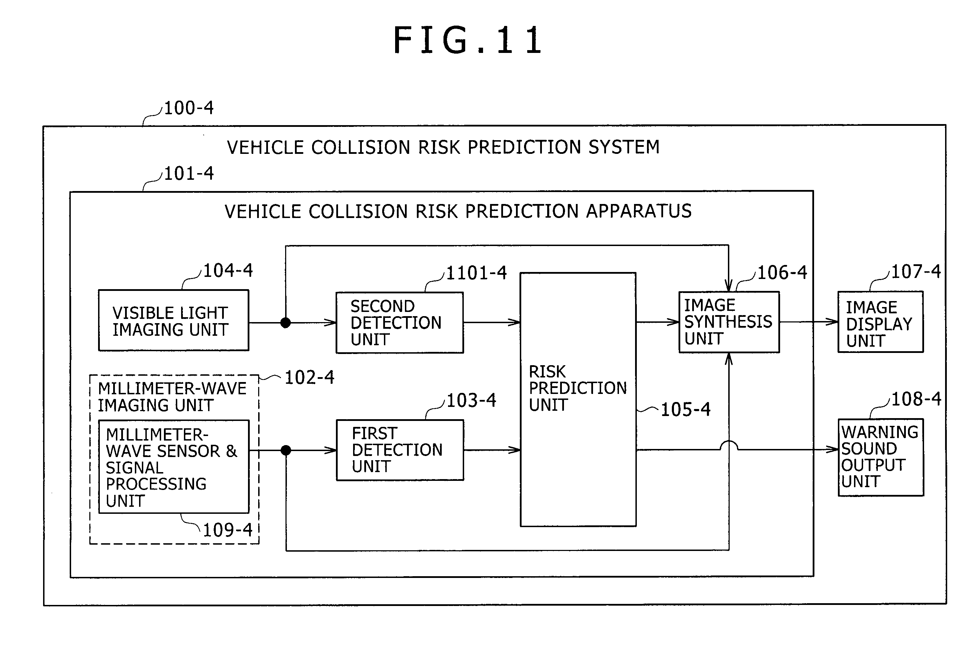

FIG. 11 is a configuration diagram illustrating a vehicle collision risk prediction system 100-4 according to the fourth embodiment of the present invention, which illustrates a configuration example in which a vehicle collision risk prediction apparatus 101-4 according to the present invention is applied to the vehicle collision risk prediction system 100-4.

The vehicle collision risk prediction apparatus 101-4 appropriately includes a millimeter wave imaging unit 102-4, a first detection unit 103-4, a visible light imaging unit 104-4, a risk prediction unit 105-4, an image synthesis unit 106-4, and a second detection unit 1101-4. The millimeter wave imaging unit 102-4 includes a millimeter wave sensor & signal processing unit 109-4.

The second detection unit 1101-4 extracts an object configuration of a living object such as a person or an animal, or a vehicle such as an automobile, a bike, or a bicycle, from the output image of the visible light imaging unit 104-4. The visible light imaging unit 104-4 also determines a travel speed of the object, and a trend of the travel. When the second detection unit 1101-4 determines that there is the collision risk object, the second detection unit 1101-4 outputs the collision risk object information indicative of a size of the collision risk object on an image, and position information to the risk prediction unit 105-4. An example of a method of determining the collision risk object by the second detection unit 1101-4 will be described later.

The risk prediction unit 105-4 receives the collision risk object information obtained in the first detection unit 103-4 and the second detection unit 1101-4, independently, matches the objects, and outputs the information to the image synthesis unit 106-4 with the addition of a parameter of "level of risk" of the collision risk object. The definition of "the level of risk" will be described later. Also, the contents of a sound signal from the risk prediction unit 105-4 to the warning sound output unit 108-4 are also changed according to "the level of risk".

The image synthesis unit 106-4 generates the synthetic image in which a part of the image of the collision risk object is superimposed on the output image of the visible light imaging unit 104 as in the first embodiment, and the information on "the level of risk" can be further provided. The image synthesis unit 106-4 then outputs the synthetic image to the image display unit 107-4. The other constituent elements in FIG. 11 are identical with those in the first embodiment illustrated in FIG. 1, and therefore a description thereof will be omitted.

The fourth embodiment is different from the first embodiment in that the fourth embodiment uses both of the detection result of the first detection unit 103-4 that detects the collision risk object with the use of the output image of the millimeter wave imaging unit 102-4, and the detection result of the second detection unit 1101-4 that detects the collision risk object with the use of the output image of the visible light imaging unit 104-4. The fourth embodiment is also different from the first embodiment in that the fourth embodiment calculates the parameter of "the level of risk" in the risk prediction unit 105-4, and changes the contents about which the driver is warned by the image or the sound according to the calculation result.

In the fourth embodiment, the parameter of "level of risk" can be obtained for the collision risk object with the use of both the detection results of the two imaging units. A warning given to the driver about the collision risk object of "level of risk A" by the image or the sound is escalated, as a result of which a particularly risky object is more easily recognized by the driver, and the driver consciously easily takes the collision avoidance action to prevent the accident.

Hereinafter, a method of determining the collision risk object in the second detection unit 1101-4 will be described.

The second detection unit 1101-4 is different from the first detection unit 103-4 using the output image of the millimeter wave imaging unit 102-4 as the input image, in that the output image of the visible light imaging unit 104-4 is used as the input image.

In the method of determining the collision risk object from the input image, the second detection unit 1101-4 may be identical in detection algorithm and setting value with the first detection unit 103-4, or different therefrom.

Hereinafter, a description will be given of an example in which the second detection unit 1101-4 uses the same detection algorithm and setting value as those in the first detection unit 103-4. As the method of determining the collision risk object from the input image, first, the object configuration of the living object such as the person or the animal, or the vehicle such as the automobile, the bike, or the bicycle is extracted from the output image output from the visible light imaging unit 104-4. Then, a predicted traveling direction and speed of the object is calculated by image processing according to the output images temporally continuously taken to predict the motion of the object. When it is determined that the object potentially passes through an area falling within a yaw angle θ[°] (for example: θ=10) and within a distance L[m] (for example: L=10) in the forward direction of the subject vehicle, and within a time t[sec] (for example: t=2), the object is determined as the collision risk object. In this case, the collision risk object information indicative of the size and the position information of the collision risk object on the image is output.

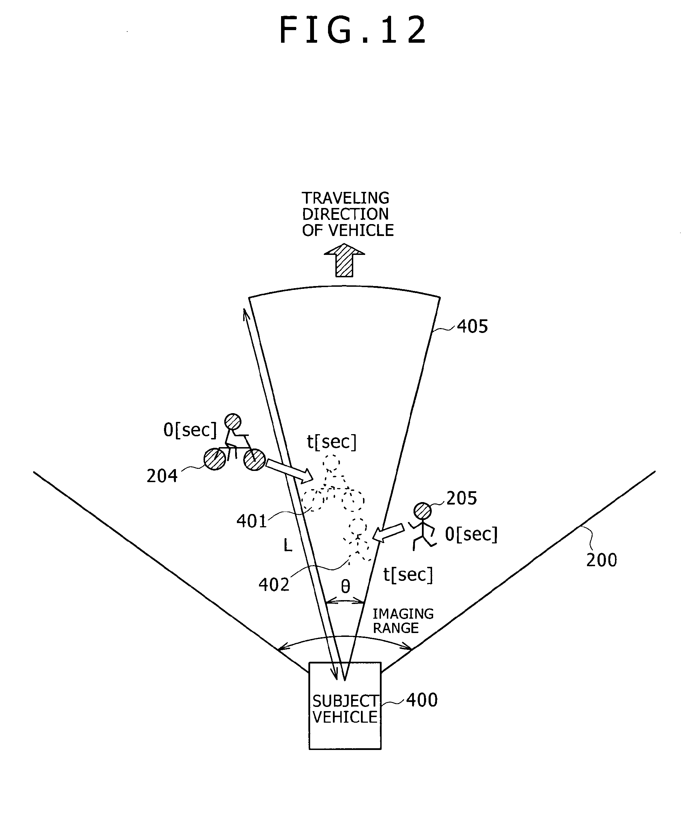

For example, in a case of FIG. 12, the object configurations of the objects (bicycle 204, pedestrian 205) present within an imaging range 200 are extracted. Then, predicted positions (401, 402 in FIG. 12) after t[sec], and predicted travel loci (outline arrows in FIG. 12) between 0[sec] and t[sec] are predicted for the respective objects. The objects whose predicted travel loci pass through the range 405 illustrated in FIG. 12 are determined as the collision risk objects. For example, in the case of FIG. 12, the bicycle 204 and the pedestrian 205 are determined as the collision risk objects.

Hereinafter, the behavior of the risk prediction unit 105-4 according to the fourth embodiment will be described.

In the fourth embodiment, both the detection results of the first detection unit 103-4 and the second detection unit 1101-4 are used as an input of the risk prediction unit 105-4. In the risk prediction unit 105-4, it is determined (matched) whether the collision risk objects are the same object, or not, on the basis of the detection results. As a specific matching method, there is a method in which, for example, when the collision risk objects are present at the same coordinates, and travel at the same speed in the same direction, it is determined that those collision risk objects are the same object.

Table 1 is a table for describing the definition of the parameter of "the level of risk" in the risk prediction unit 105-4.

**Table 1**

| | | Second Detection | |
|---|---|---|---|
| | | UnitDetection | No Detection |
| First Detection Unit | Detection | Risk Level B | Risk Level A |
| | No Detection | Risk Level B | No Risk Level |

The definition of "the level of risk" as illustrated in Table 1 is based on an idea that, to lightly state, "invisible risk is riskier". That is, (in fact, although a wavelength that can be imaged by the visible light imaging unit 104-4 is wider than a visible range of the person,) the object that can be detected by the visible light can be visibly recognized by the driver, and can be conceived as a standard level of risk. On the contrary, the object that cannot be detected by the visible light may potentially come close to the subject vehicle because the driver has no means of knowing the object, and can be conceived as a high level of risk. Further, for example, the object present at a shorter distance to the subject vehicle on the basis of the distance information is conceived as the higher level of risk according to a distance and a relative speed to the object, and a position thereof. With the use of the apparatus and system according to the present invention, the level of risk is determined by the risk prediction unit 105-4, and the driver can be strongly warned about the object high in the level of risk.

The risk prediction unit 105-4 determines the levels of risk of the object as illustrated in Table 1, according to a condition of whether the object could be detected, or not, in each of the first detection unit 103-4 that detects the object by the millimeter wave and the second detection unit 1101-4 that detects the object by the visible light, with respect to the matching results of the object. As the determining method, the object that could be detected by the first detection unit 103-4 is first defined as "the level of risk B". Further, among the objects that could not be detected by the first detection unit 103-4, the objects that could be detected by the second detection unit 1101-4 are defined as "the level of risk A", and the object that could not be detected by the second detection unit 1101-4 are defined as "the level of risk B". The object of "the level of risk A" is higher in risk of collision than the object of "the level of risk B".

In the image synthesis unit 106-4, as in the first embodiment, the image is synthesized in such a manner that the output image taken by the millimeter wave is superimposed on the output image taken by the visible light, and the collision risk objects are emphasized by markers. Further, in the image synthesis unit, the image is synthesized in such a manner that the object of the level of risk A is particularly emphasized to allow the driver to easily understand the warning (an emphasizing method will be described later).

Also, a volume of a warning sound, a tone of the warning sound, a warning statement of the synthetic sound as the warning sound, or a tone of the synthetic sound as the warning sound, of the sound signal generated by the risk prediction unit 105-4 is changed according to the level of risk so that warning about the collision risk object of "the level of risk A" is particularly strongly given with a sound

Thus, when the driver is more strongly warned as the object is higher in the level of risk, the object that is particularly liable to be linked to the collision accident can be more consciously avoided by the driver. As a result, the collision can be prevented.

Hereinafter, synthesis of the image will be described specifically with reference to the drawings.

As in the first embodiment, a diagram exemplifying the output image of the millimeter wave imaging unit 102-4 is identical with FIG. 3. In the first detection unit 103-4, for example, four collision risk objects (bicycle 204, pedestrian 205, pedestrian 301, and automobile 302) are detected on the basis of the output image.

On the other hand, a diagram exemplifying the output image of the visible light imaging unit 104-4 is identical with FIG. 2. In the second detection unit 1101-4, for example, two collision risk objects (bicycle 204, pedestrian 205) are detected on the basis of the output image.

Thus, when the objects detected by the two detection units are matched, the four collision risk objects of the bicycle 204, the pedestrian 205, the pedestrian 301, and the automobile 302 are detected. Further, when the level of risk is determined on the basis of Table 1, the pedestrian 301 and the automobile 302 are determined as "the level of risk A", and the bicycle 204 and the pedestrian 205 are determined as "the level of risk B".

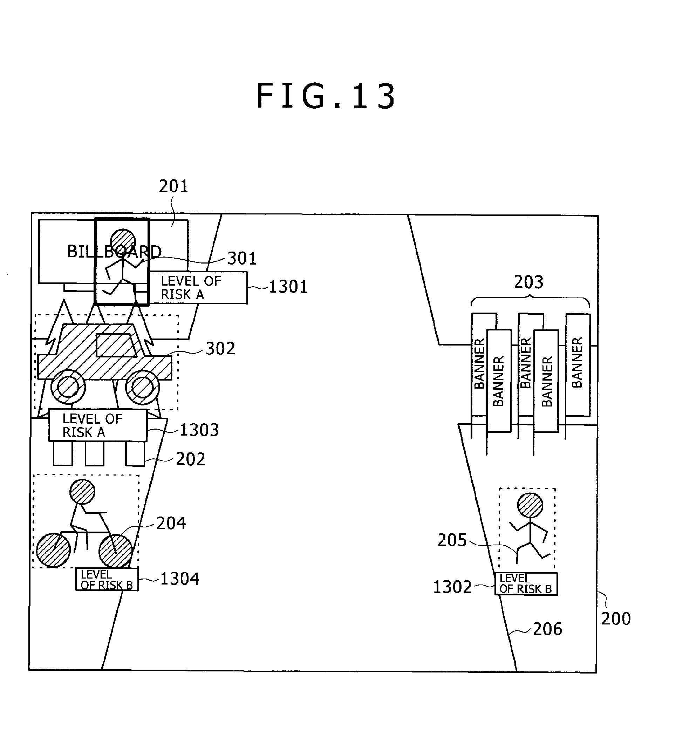

FIG. 13 is a diagram illustrating an example of the output image of the image synthesis unit 106-4. As in FIG. 5, in FIG. 13, the objects determined as the collision risk objects are clipped along the configurations of the objects from the output image of the millimeter wave imaging unit 102-4, and superimposed on the output image of the visible light imaging unit 104-4.

In FIG. 13, the degree of emphasizing the object is different according to the level of risk. For example, as illustrated in FIG. 13, the objects of "the level of risk B" are drawn so as to be surrounded by rectangular dotted lines as in FIG. 5. On the other hand, the object of "the level of risk A" is drawn so as to be surrounded by a bold line 301 in FIG. 5. For example, when the type of marker is thus changed, the particularly risky objects are more easily recognized by the driver, and the driver consciously easily takes the collision avoidance action to prevent the accident. The emphasis of the object according to the level of risk is not limited to this configuration, but can be variously changed such that the brightness is increased according to the level of risk. Also, warning may be given about only the level of risk A with the sound and the image, and about the level of risk B or lower with only the image or the sound.

As described above, with the use of configuration according to the fourth embodiment, the parameter of "the level of risk" can be obtained for the collision risk object with the use of both the detection results of the two imaging units. For the collision risk object of "the level of risk A", warning given to the driver is heightened by the image and the sound. As a result, the particularly risky objects are more easily recognized by the driver, and the driver consciously easily takes the collision avoidance action to prevent the accident.

### Fifth Embodiment

Hereinafter, a fifth embodiment of the present invention will be described in detail.

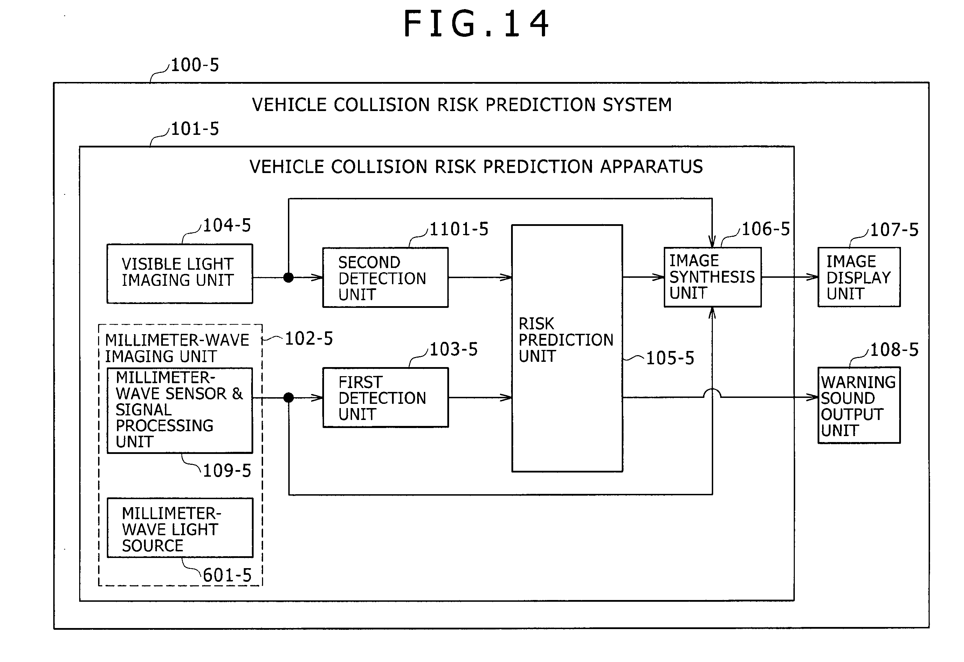

FIG. 14 is a configuration diagram illustrating a vehicle collision risk prediction system 100-5 according to the fifth embodiment of the present invention, which illustrates a configuration example in which a vehicle collision risk prediction apparatus 101-5 according to the present invention is applied to the vehicle collision risk prediction system 100-5.

The vehicle collision risk prediction apparatus 101-5 appropriately includes a millimeter wave imaging unit 102-5, a first detection unit 103-5, a visible light imaging unit 104-5, a risk prediction unit 105-5, an image synthesis unit 106-5, and a second detection unit 1101-5. The millimeter wave imaging unit 102-5 includes a millimeter wave sensor & signal processing unit 109-5, and a millimeter wave source 601-5.

As in FIG. 6 illustrating the second embodiment, the millimeter wave source 601-5 is configured by a light source (radiation source) that can radiate the electromagnetic wave (wavelength ranges from about several tens µm to about 1 cm), which can be imaged by the millimeter wave imaging unit 102-5, in the periphery of the subject vehicle to be photographed. The other constituent elements in FIG. 14 are identical with those in the fourth embodiment illustrated in FIG. 11, and therefore a description thereof will be omitted.

In the fifth embodiment, as in the second embodiment, the millimeter wave source 601-5 and the millimeter wave imaging unit 102-5 are combined together in the imaging method of the active type. Since the imaging method of the active type is applied, the vehicle such as the automobile, the bikes, or the bicycles, which are objects covered with metal can be sharply imaged more than that in the imaging method of the passive type. As a result, a detection precision in the risk object, and a sharpness of the synthetic image provided to the driver are improved.

Further, in the fifth embodiment, as with the fourth embodiment, the parameter of "the level of risk" can be obtained for the collision risk object with the use of both the detection results of the two imaging units. For the collision risk object of "the level of risk A", warning given to the driver is heightened by the image and the sound. As a result, the particularly risky objects are more easily recognized by the driver, and the driver consciously easily takes the collision avoidance action to prevent the accident.

The fifth embodiment is different from the second and fourth embodiments in that the fifth embodiment can use both of a technique for applying the active type imaging method as in the second embodiment, and a technique for obtaining the parameter of "the level of risk" to change the synthetic image and the sound signal according to the obtained parameter as in the fourth embodiment, at the same time. In the fifth embodiment, the technique for applying the imaging method of the active type is identical with that of the second embodiment, and therefore a description thereof will be omitted. Also, in the fifth embodiment, the technique for obtaining the parameter of "the level of risk" to change the synthetic image and the sound signal according to the obtained parameter is identical with that of the fourth embodiment, and therefore a description thereof will be omitted.

As described above, with the use of the configuration according to the fifth embodiment, as in the second embodiment, the collision risk objects present behind the obstruction can be detected with high precision, and the driver can be warned with the provision of the captured sharp image. As a result, since the driver can more property take the collision avoidance action, the collision accident can be obviated.

Also, at the same time, with the use of the configuration according to the fifth embodiment, as with the fourth embodiment, the parameter of "the level of risk" can be obtained for the collision risk object with the use of both the detection results of the two imaging units. For the collision risk object of "the level of risk A", warning given to the driver is heightened by the image and the sound. As a result, the particularly risky objects are more easily recognized by the driver, and the driver consciously easily takes the collision avoidance action to prevent the accident. Thus, the fifth embodiment can obtain both the advantages of the second embodiment and the fourth embodiment at the same time.

### Sixth Embodiment

Hereinafter, a sixth embodiment of the present invention will be described in detail.

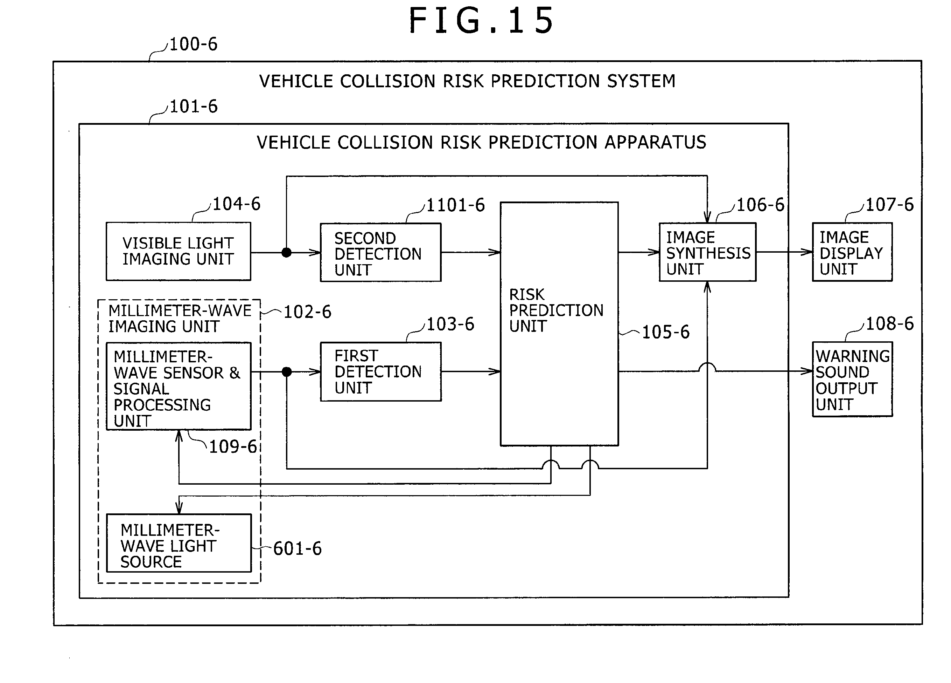

FIG. 15 is a configuration diagram illustrating a vehicle collision risk prediction system 100-6 according to the sixth embodiment of the present invention, which illustrates a configuration example in which a vehicle collision risk prediction apparatus 101-6 according to the present invention is applied to the vehicle collision risk prediction system 100-6.

The vehicle collision risk prediction apparatus 101-6 appropriately includes a millimeter wave imaging unit 102-6, a first detection unit 103-6, a visible light imaging unit 104-6, a risk prediction unit 105-6, an image synthesis unit 106-6, and a second detection unit 1101-6. The millimeter wave imaging unit 102-6 includes a millimeter wave sensor & signal processing unit 109-6, and a millimeter wave source 601-6.

As in FIG. 9 illustrating the third embodiment, the millimeter wave source 601-6 is configured by a light source (radiation source) that can radiate the electromagnetic wave (wavelength ranges from about several tens µm to about 1 cm), which can be imaged by the millimeter wave imaging unit 102-6, in the periphery of the subject vehicle to be photographed.

The risk prediction unit 105-6 outputs a control signal for controlling an imaging parameter of the millimeter wave imaging unit 102-6 to the millimeter wave imaging unit 102-6. Also, the risk prediction unit 105-6 outputs a control signal for switching on (light on)/ off (light off) the millimeter wave source 601-6 to the millimeter wave source 601-6.

Further, as in FIG. 11 illustrating the fourth embodiment, the risk prediction unit 105-6 receives the collision risk object information obtained in the first detection unit 103-6 and the second detection unit 1101-6, independently, matches the objects, and outputs the information to the image synthesis unit 106-6 with the addition of the parameter of "level of risk" of the collision risk object. The other constituent elements in FIG. 14 are identical with those in the fourth embodiment illustrated in FIG. 14, and therefore a description thereof will be omitted.

The sixth embodiment is different from the third and fourth embodiments in that the sixth embodiment can use both of a technique for switching the active type imaging method and the passive type imaging method by time sharing as in the third embodiment, and a technique for obtaining the parameter of "the level of risk" to change the synthetic image and the sound signal according to the obtained parameter as in the fourth embodiment, at the same time. In the fifth embodiment, the technique for switching the active type imaging method and the passive type imaging method by time sharing for imaging is identical with that of the third embodiment, and therefore a description thereof will be omitted. Also, in the fifth embodiment, the technique for obtaining the parameter of "the level of risk" to change the synthetic image and the sound signal according to the obtained parameter is identical with that of the fourth embodiment, and therefore a description thereof will be omitted.

As described above, with the use of the configuration according to the sixth embodiment, as in the third embodiment, both of detection results of those two imaging methods can be used. This can realize both of an action for enhancing the detection precision of the object made of metal such as the vehicle by imaging of the active type, and an action for enabling the detection of the pedestrian or the animal by imaging of the passive type, at the same time.

Also, at the same time, with the use of the configuration according to the sixth embodiment, as with the fourth embodiment, the parameter of "the level of risk" can be obtained for the collision risk object with the use of both the detection results of the two imaging units. For the collision risk object of "the level of risk A", warning given to the driver is heightened by the image and the sound. As a result, the particularly risky objects are more easily recognized by the driver, and the driver consciously easily takes the collision avoidance action to prevent the accident. Thus, the sixth embodiment can obtain both the advantages of the third embodiment and the fourth embodiment at the same time.

### Seventh Embodiment

Hereinafter, a seventh embodiment of the present invention will be described in detail.

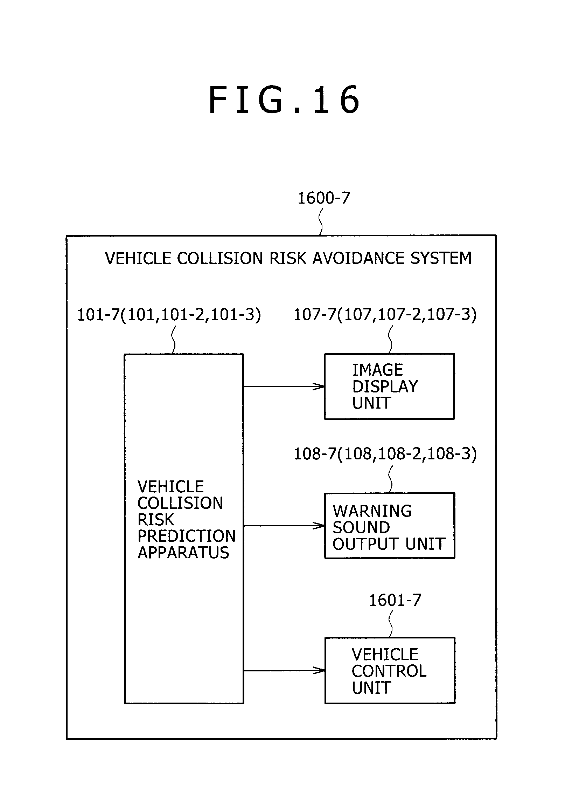

FIG. 16 is a configuration diagram illustrating a vehicle collision risk avoidance system 1600-7 according to the seventh embodiment of the present invention. The seventh embodiment shows a configuration example in which the vehicle collision risk prediction apparatus described in any one of the first embodiment (101 in FIG. 1), the second embodiment (101-2 in FIG. 6), and the third embodiment (101-3 in FIG. 9) of the present invention is applied to the vehicle collision risk avoidance system 1600-7.

The vehicle collision risk avoidance system 1600-7 is mounted on the vehicle, detects a risk of collision in the periphery of the vehicle (for example, a forward direction), and warns the driver. Also, in order to avoid the collision, the vehicle collision risk avoidance system 1600-7 allows the vehicle per se to take the collision avoidance action, and avoids the collision.

The vehicle collision risk avoidance system 1600-7 includes a vehicle collision risk prediction apparatus 101-7, an image display unit 107-7, a warning sound output unit 108-7, and a vehicle control unit 1601-7. The vehicle collision risk prediction apparatus 101-7 is configured by the vehicle collision risk prediction apparatus described mainly by any one of the first embodiment (FIG. 1), the second embodiment (FIG. 6), and the third embodiment (FIG. 9). Further, the first detection unit (any one of FIGS. 1, 6, and 9) within the vehicle collision risk prediction apparatus 101-7 determines "collision avoidance object" indicative of an object to be avoided by the vehicle per se, and outputs "collision avoidance object information" to the risk prediction unit.

Further, the risk prediction unit (any one of 105 in FIG. 1, 105-2 in FIG. 6, and 105-3 in FIG. 9) within the vehicle collision risk prediction apparatus 101-7 outputs "collision avoidance information" indicating how the vehicle should take the collision risk avoidance action to the vehicle control unit 1601-7. The vehicle control unit 1601-7 receives the collision avoidance information from the risk prediction unit (any one of 105 in FIG. 1, 105-2 in FIG. 6, and 105-3 in FIG. 9), and automatically controls braking or handling of the subject vehicle regardless of the operation of the driver. The image display unit 107-7 and the warning sound output unit 108-7 are identical with 107 and 108 in FIG. 1 illustrating the first embodiment, and therefore a description thereof will be omitted.

In the seventh embodiment, the driver is warned about the collision risk object to facilitate the collision avoidance action through any technique of the first to third embodiments.

On the other hand, the seventh embodiment is different from the first to third embodiments in that even if the driver does not take the collision avoidance action, the subject vehicle per se makes a determination, and takes the collision avoidance action for the purpose of preventing the collision with the object.

A specific method in which the subject vehicle per se makes a determination, and takes the collision avoidance action will be described, for example, below.

First, the first detection unit (any one of FIGS. 1, 6, and 9) detects an object (collision avoidance object) whose collision should be avoided. In this case, methods for determining the collision risk object and the collision avoidance object may be identical in algorithm and setting value, or changed.

For example, as the determination algorithm of the collision avoidance object, as with the determination algorithm of the collision risk object illustrated in FIG. 4 illustrating the first embodiment, there can be applied a technique in which the predicted traveling direction and speed of the object are calculated by image processing to predict the motion of the object.

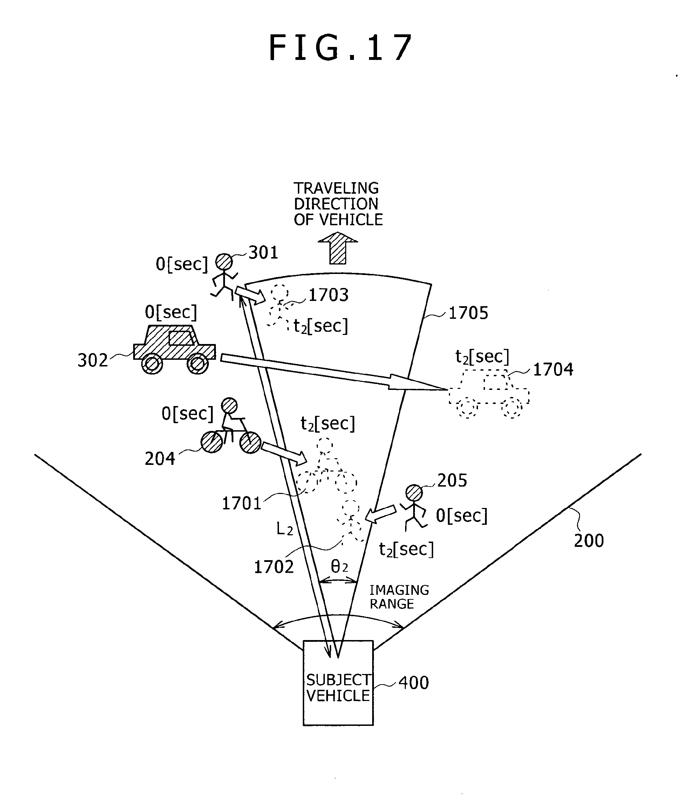

FIG. 17 is a diagram illustrating an example of a method for determining the collision avoidance object in the first detection unit. In this technique, when it is determined that the object potentially passes through an area falling within a yaw angle θ₂[°] (for example: θ₂=8) and within a distance L₂[m] (for example: L₂=5) in the forward direction of the subject vehicle, and within a time t₂[sec] (for example: t₂=1), the object is determined as the collision avoidance object.

For the object determined as the collision avoidance object, the risk prediction unit (any one of FIGS. 1, 6, and 9) outputs a vehicle control signal for taking the collision avoidance action to the vehicle control unit 1601-7. The vehicle control unit controls the subject vehicle so as to decelerate the subject vehicle by braking, or take the collision avoidance action by handing in a direction opposite to the collision avoidance object. Also, when the vehicle automatically takes the collision avoidance action, the vehicle control unit displays a warning statement in the image displayed by the image display unit, and also issues a sound from the warning sound output unit to notify the driver of the collision risk.

If θ₂≤θ, L₂≤L, and t₂≤t is satisfied as in this example, safety measurements can be gradually taken as the object comes closer to the subject vehicle. If the object comes closer to the subject vehicle, the object is determined as the collision risk object, and the driver is warned to facilitate a voluntary collision avoidance action of the driver. Thereafter, if the object further comes closer to the subject vehicle, the object is determined as the collision avoidance object, and the vehicle per se takes the collision avoidance action.

As described above, with the use of the configuration according to the seventh embodiment, as in the first to third embodiments, the driver can be warned about the collision risk objects present behind the obstruction by the image and/or sound, and can properly take the collision avoidance action. As a result, the collision accident can be obviated. Also, with the use of the configuration according to the seventh embodiment, even if the driver does not take the collision avoidance action, since the subject vehicle automatically takes the collision avoidance action, the collision accident can be obviated.

As a modified example of this embodiment, the image display unit 107-7 can be omitted from the configuration of FIG. 16. Also, the visible light imaging unit (any one of 104 in FIG. 1, 104-2 in FIG. 6, and 104-3 in FIG. 9), and the visible light imaging unit (any one of 106 in FIG. 1, 106-2 in FIG. 6, and 106-3 in FIG. 9) can be omitted from the configuration of FIG. 16. In the configuration, when warning given to the driver by the synthetic image is omitted, and the collision avoidance action is determined, the vehicle per se can take the collision avoidance action. Also, as a modified example of this embodiment, the warning sound output unit 108-7 can be omitted from the configuration of FIG. 16. In this configuration, when warning given to the driver by the sound is omitted, and the collision avoidance action is determined, the vehicle per se can take the collision avoidance action.

### Eighth Embodiment

Hereinafter, an eighth embodiment of the present invention will be described in detail.

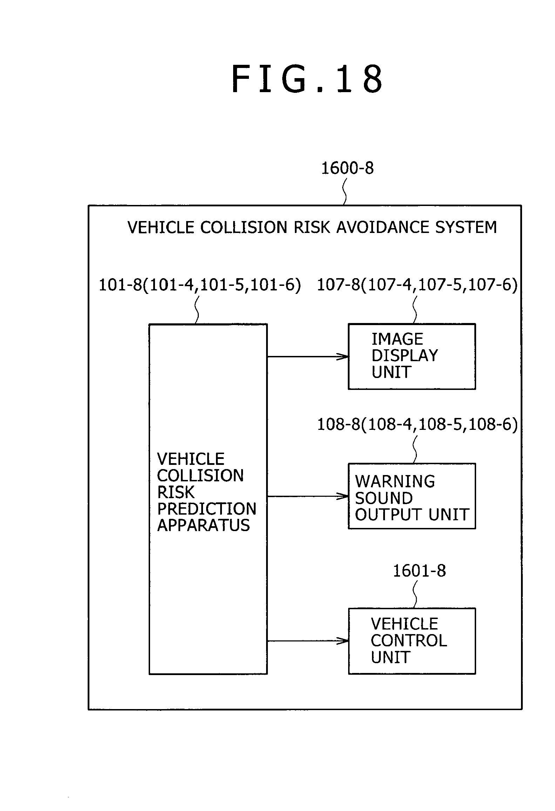

FIG. 18 is a configuration diagram illustrating a vehicle collision risk avoidance system 1600-8 according to the eighth embodiment of the present invention. The eighth embodiment shows a configuration example in which the vehicle collision risk prediction apparatus described in any one of the fourth embodiment (101-4 in FIG. 11), the fifth embodiment (101-5 in FIG. 14), and the sixth embodiment (101-6 in FIG. 15) of the present invention is applied to the vehicle collision risk avoidance system 1600-8.

The vehicle collision risk avoidance system 1600-8 is mounted on the vehicle, detects a risk of collision in the periphery of the vehicle (for example, a forward direction), and warns the driver. Also, in order to avoid the collision, the vehicle collision risk avoidance system 1600-8 allows the vehicle per se to take the collision avoidance action, and avoids the collision.

The vehicle collision risk avoidance system 1600-8 includes a vehicle collision risk prediction apparatus 101-8, an image display unit 107-8, a warning sound output unit 108-8, and a vehicle control unit 1601-8.

The vehicle collision risk prediction apparatus 101-8 is configured by the vehicle collision risk prediction apparatus described mainly by any one of the fourth embodiment (101-4 in FIG. 1), the fifth embodiment (101-4 in FIG. 14), and the sixth embodiment (101-4 in FIG. 15).

Further, the first detection unit (any one of 103-4 in FIG. 11, 103-5 in FIG. 14, and 103-6 in FIG. 15) within the vehicle collision risk prediction apparatus 101-8 determines "collision avoidance object" indicative of an object to be avoided by the vehicle per se, and outputs "collision avoidance object information" to the risk prediction unit (any one of 105-4 in FIG. 11, 105-5 in FIG. 14, and 105-6 in FIG. 15) as in the seventh embodiment.

Further, the second detection unit (any one of 1101-4 in FIG. 11, 1101-5 in FIG. 14, and 1101-6 in FIG. 15) within the vehicle collision risk prediction apparatus 101-8 determines "collision avoidance object" indicative of an object to be avoided by the vehicle per se, and outputs "collision avoidance object information" to the risk prediction unit as in the seventh embodiment.

Further, the risk prediction unit (any one of 105 in FIGS. 11, 14, and 15) within the vehicle collision risk prediction apparatus 101-8 outputs "collision avoidance information" indicating how the vehicle should take the collision risk avoidance action to the vehicle control unit 1601-8.

The vehicle control unit 1601-8 receives the collision avoidance information from the risk prediction unit (any one of 105-4 in FIG. 11, 105-5 in FIG. 14, and 105-6 in FIG. 15), and controls braking or handling of the subject vehicle. The image display unit 107-8 and the warning sound output unit 108-8 are identical with 107-4 and 108-4 in FIG. 11 illustrating the fourth embodiment, and therefore a description thereof will be omitted.

In the eighth embodiment, the driver is warned about the collision risk object to facilitate the collision avoidance action through any technique of the fourth to sixth embodiments.

On the other hand, the eighth embodiment is different from the fourth to sixth embodiments in that even if the driver does not take the collision avoidance action, the subject vehicle per se makes a determination, and takes the collision avoidance action for the purpose of preventing the collision with the object.

Also, the eighth embodiment is different from the seventh embodiment in that the second detection unit (any one of 1101-4 in FIG. 11, 1101-5 in FIG. 14, and 1101-6 in FIG. 15) is provided, and the collision avoidance object is further determined with the use of both the detection results of the first detection unit and the second detection unit.

A specific method in which the subject vehicle per se makes a determination, and takes the collision avoidance action will be described, for example, below.

First, the first detection unit and the second detection unit detect objects (collision avoidance objects) whose collision should be avoided. In this case, methods for determining the collision risk object and the collision avoidance object may be identical in algorithm and setting value, or changed. The method of detecting the collision avoidance object in the first detection unit is described in the seventh embodiment with reference to FIG. 17, and therefore a description thereof will be omitted.

In the method for determining the collision risk object from the input image in the second detection, the detection algorithms and the setting values of the first detection unit and the second detection unit may be identical with each other, and changed.

Hereinafter, an example in which the same detection algorithm and setting value as those in the first detection unit are used even in the second detection unit will be described.

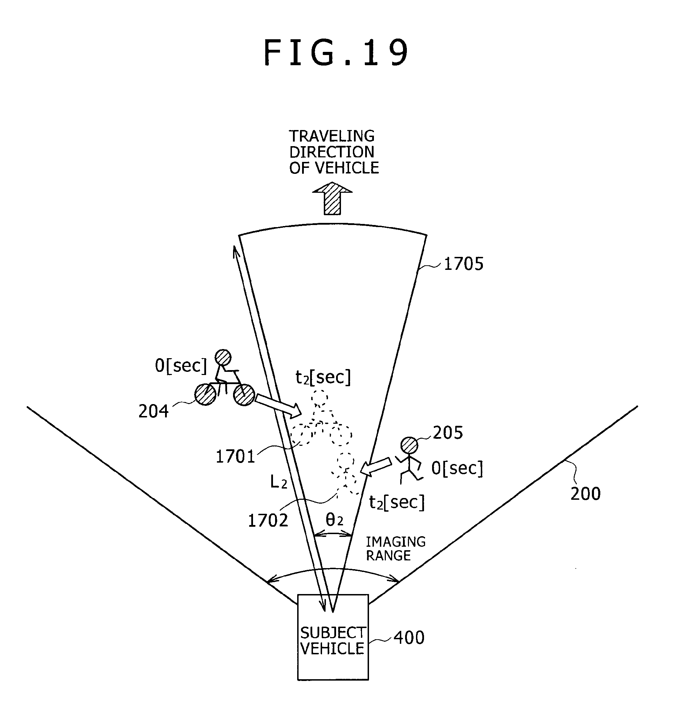

FIG. 19 is a diagram illustrating an example of a method for determining the collision avoidance object in the second detection unit. For example, in the case of FIG. 19, the object configurations of the objects (bicycle 204, pedestrian 205) present in an imaging range 200 are extracted. Then, predicted positions (1701, 1702 in FIG. 19) after t₂[sec], and predicted travel loci (outline arrows in FIG. 19) between 0[sec] and t₂[sec] are predicted for the respective objects. The objects whose predicted travel loci pass through a range 1705 illustrated in FIG. 19 are determined as the collision avoidance objects. For example, in the case of FIG. 19, the bicycle 204 and the pedestrian 205 are determined as the collision risk objects.

In the eighth embodiment, both the detection results of the first detection unit and the second detection unit are used as the input of the risk prediction unit.

In the risk prediction unit, it is determined (matched) whether the collision risk objects are the same object, or not, on the basis of the detection results. As a specific matching method, there is a method in which, for example, when it is detected that the collision risk objects are present at the same coordinates, and travel at the same speed in the same direction, those collision risk objects are determined as the same object. The above-mentioned Table 1 describes the definition of the parameter of "the level of risk" in the risk prediction unit. The risk prediction unit determines the levels of risk of the object as illustrated in Table 1, according to a condition of whether the object could be detected as the collision avoidance object, or not, in each of the first detection unit that detects the object by the millimeter wave and the second detection unit that detects the object by the visible light, with respect to the matching results of the object.

In the eighth embodiment, the collision avoidance action is taken for the objects determined as the level of risk A or B among the collision avoidance objects. Since collision with the objects detected by at least one of the millimeter wave and the visible light can be avoided, the ratio of detection of the objects can be enhanced.

As described above, with the use of the eighth embodiment, as in the fourth to sixth embodiments, the level of risk is calculated according to both the detection results of the visible light and the millimeter wave, and the degree of warning is controlled according to the level of risk. As a result, the risker object invisible by the driver can be more easily recognized by the driver to prevent the accident.

Also, with the use of the configuration according to the eighth embodiment, even if the driver does not take the collision avoidance action, since collision with the objects detected by at least one of the millimeter wave and the visible light can be avoided, the subject vehicle can automatically take the collision avoidance action on the basis of the high ratio of detection, and the collision accident can be obviated.

As one modified example of this embodiment, the image display unit can be omitted from the configuration of FIG. 16. In this configuration, when warning given to the driver by the synthetic image is omitted, and the collision avoidance object is determined, the vehicle per se can take the collision avoidance action. Also, as another modified example of this embodiment, the warning sound output unit can be omitted from the configuration of FIG. 16. In this configuration, when warning given to the driver by the sound is omitted, and the collision avoidance object is determined, the vehicle per se can take the collision avoidance action.

### Ninth Embodiment

Hereinafter, a ninth embodiment of the present invention will be described in detail.

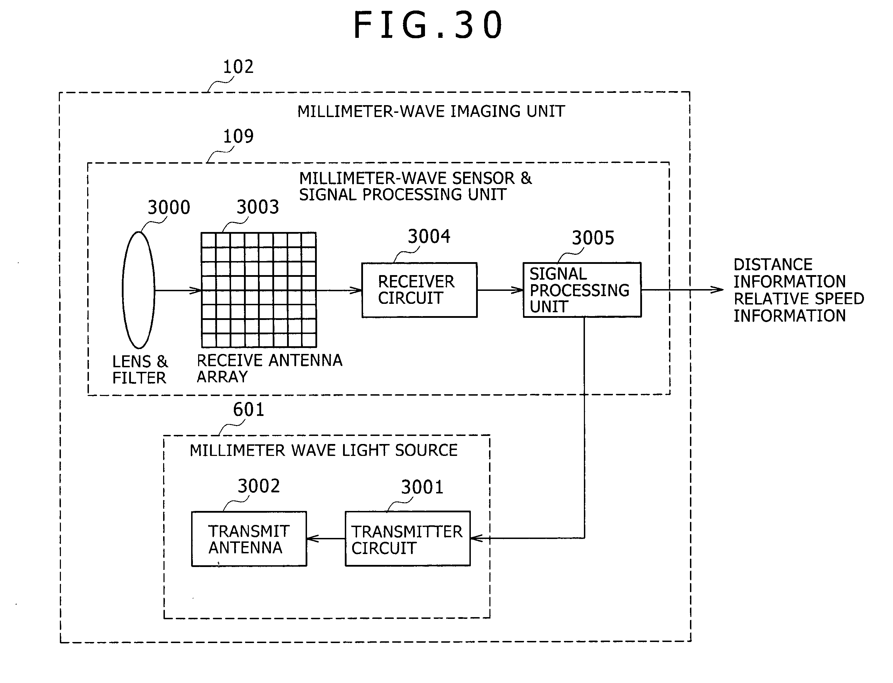

FIG. 30 is a diagram illustrating a detailed configuration example of the millimeter wave imaging unit 102, which takes the configuration of, for example, the second embodiment (FIG. 6), the third embodiment (FIG. 9), the fifth embodiment (FIG. 14), or the sixth embodiment (FIG. 15) as the vehicle collision risk prediction apparatus of the present invention.

The millimeter wave imaging unit 102 appropriately includes the millimeter wave sensor & signal processing unit 109, and the millimeter wave source 601. The millimeter wave source 601 appropriately includes a transmitter circuit 3001, and a transmit antenna 3002. The millimeter wave sensor & signal processing unit 109 appropriately includes a lens filter 3000, a receive antenna array 3003, a receiver circuit 3004, and a signal processing unit 3005.

The transmitter circuit 3001 generates a transmit signal of analog at a timing designated by the signal processing unit 3005, and outputs the transmit signal to the transmit antenna 3002. The transmit antenna 3002 can radiate the electromagnetic wave including a signal of the wavelength ranging from the millimeter wave band to the submillimeter wave band (wavelength ranges from about several tens µm to about 1 cm) in the periphery of the subject vehicle to be photographed.

The lens filter 3000 focuses and filters the electromagnetic wave of the above wavelength for each pixel or on a surface so as to receive the electromagnetic wave with high precision. The receive antenna array 3003 of the wavelength has a plurality of antennas that receives the electromagnetic wave including the signal of the above wavelength, two-dimensionally arranged, and outputs a receive signal of analog to the receiver circuit 3004. The receiver circuit 3004 A/D converts the receive signal of analog into the receive signal of digital, and outputs the receive signal to the signal processing unit 3005. The signal processing unit 3005 outputs a digital signal for controlling an output timing, which is a transmit signal, to the transmitter circuit 3001. Also, the signal processing unit 3005 compares a timing for transmitting the transmit signal with a receive signal output from the receiver circuit, calculates distance information on a given object, and relative speed information on the given object, and outputs calculated information to the first detection unit 103.

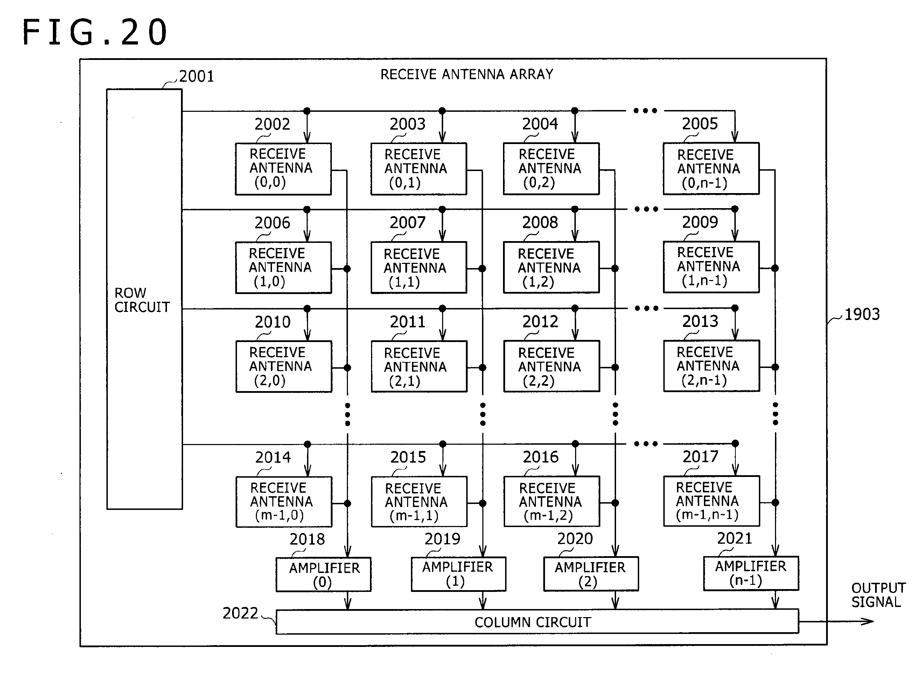

FIG. 20 illustrates a configuration example of the receive antenna array 3003. The receive antenna array 3003 appropriately includes a row circuit 2001, the receive antennas (2002 to 2017) arranged two-dimensionally, amplifiers (2018 to 2021) arranged one-dimensionally in a row direction, and a column circuit 2022.

The receive antennas (2002 to 2017) are arranged at the respective individual positions, and can also receive signals from the air with the same or individual directionalities. The row circuit 2001 and the column circuit 2022 select one or a plurality of receive antennas among the receive antennas (2002 to 2017), and allows the selected receive antennas to output signals. The amplifiers (2018 to 2021) amplify the signals output from the receive antennas, and output the signals to the column circuit 2022.

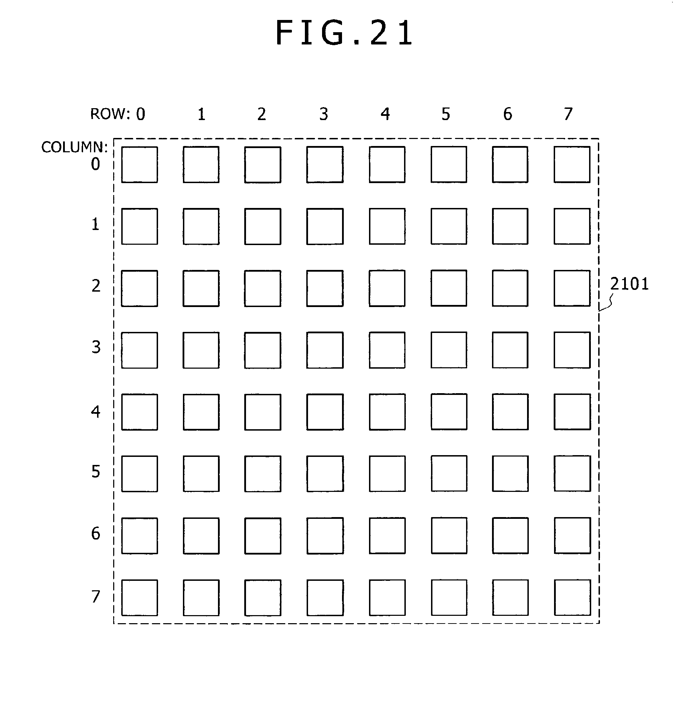

FIG. 21 is a diagram illustrating an example of a position 2101 of pixels outputting distance information and relative speed information from the millimeter wave imaging unit. Squares arranged two-dimensionally in FIG. 21 indicate the positions of the pixels output from the millimeter wave imaging unit 102 in FIG. 30. The number of receive antennas is arbitrary in the respective row and column directions, and when the number of receive antennas is larger, the output signal can be obtained by a large number of pixels. Fig. 21 illustrates an example in which the receive antenna array 3003 is configured by using 64 receive antennas of m=8, n=8, that is, 8x8. In this case, the position information (depth) on the given object, and the relative speed of the given object are calculated for the respective pixels of 8x8 by the signal processing unit, and output. FIG. 21 illustrates a case in which the position information & relative speed information are output for all of the pixel positions.

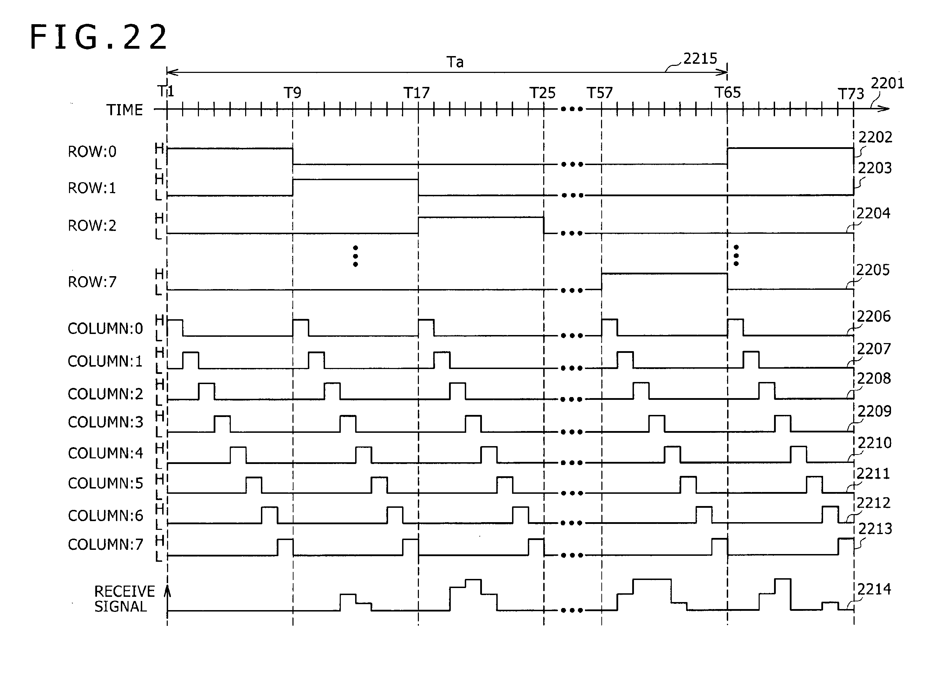

FIG. 22 is a diagram illustrating an example of an operation timing of the receive antenna array 3003. The receive arrays are selected in the order of raster scanning one by one according to row select signals (2201 to 2005) input to the row circuit 2001, and column select signals (2206 to 2213) input to the column circuit 2022. FIG. 22 illustrates that the receive array of the appropriate row and column is selected when both the select signals of the row and column are "H" level (rising state). FIG. 22 also illustrates that the receive array of the appropriate row and column is not selected when any one select signal of the row and column is "L" level (falling state).

In the case of FIG. 22, all of the receive antennas are periodically selected in the order of raster scanning in the stated order of (0, 0), (0, 1), (0, 2), ..., (0, 7), (1, 0), (1, 1), ..., (7, 7). In this case, it is assumed that a period in which the receive antennas are selected, that is, a frame period is Ta. An output signal (receive signal) 2214 of a receive array signal is output to the receiver circuit 3004 from only the selected receive antenna. As the receive signals 2214, the signals received by the respective receive antennas are output in the order of scanning lines.

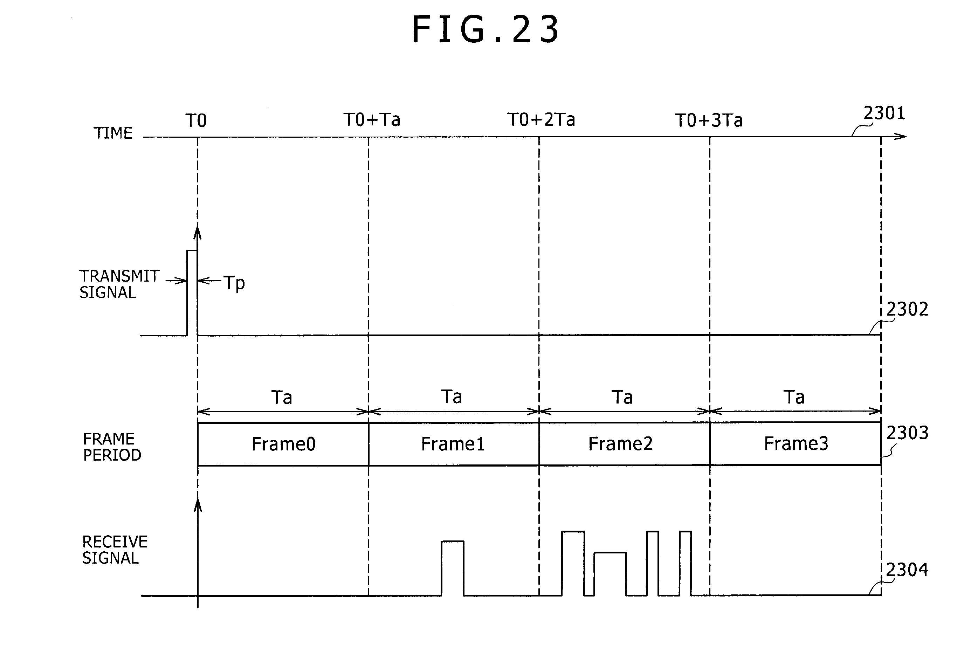

FIG. 23 is a diagram illustrating an example of an operation timing of the millimeter wave imaging unit. The transmitter circuit 3001 outputs an output signal (transmit signal) 2302 at a timing designated by the signal processing unit 3005. The transmit signal 2302 is radiated in the periphery of the subject vehicle as the electromagnetic wave of the wavelength ranging from the millimeter wave band to the submillimeter wave band. For example, the transmit signal 2302 is a pulse wave having a width Tp which rises nearly at a time T0. In this case, the pulse wave is output as the electromagnetic wave. As in FIG. 22, the receive antenna array outputs the receive signals of all the pixels at the frame period Ta in order. In FIG. 23, a frame period 2303 in this situation is indicated as Frame 0, Frame 1, Frame 2, and Frame 3.

The radiated electromagnetic wave is reflected on the object present in the traveling direction of the electromagnetic wave, and received by the receive antenna array 3003 and output (receive signal 2304). A delay time τ occurs according to the distance and relative speed between the object and the subject vehicle until the electromagnetic wave radiated from the transmit antenna is reflected by a given object, and returned. If the electromagnetic wave is reflected with no time delay (τ = T0) (that is, distance is zero), the receive signal 2304 is output in all the frame periods of Frame 0. However, because the above-mentioned delay time occurs, the timing at which the receive signal is output is changed according to the distance. For example, the respective receive signals are output in the Frame 0 when T0≤τ<(T0+Ta) is satisfied, in the Frame 1 when (T0+Ta)≤τ<(T0+2Ta) is satisfied, in the Frame 2 when (T0+2Ta)≤τ<(T0+3Ta) is satisfied, and in the Frame 3 when (T0+3Ta)≤τ<(T0+4Ta) is satisfied. In the respective frame periods, the receive signals are output in the order of scanning lines.

The signal processing unit 3005 compares the receive signal 2304 thus received with the transmit signal 2302 to obtain the amount of delay for each pixel. That is, the signal processing unit 3005 can calculate the distance information for each of two-dimensional pixels.

In this way, the signal processing unit 3005 can obtain the distance information and the relative speed information two-dimensionally for the signal of the selected receive antenna as illustrated in FIG. 19. That is, the position information on the three-dimensions (two-dimensions + depth) of the given object can be obtained by the technique of this embodiment.

Also, when the transmit signal 2302 is a signal (beat signal) which is not a pulse but includes a plurality of frequencies ranging from a low frequency to a high frequency, the distance as well as the relative speed to the given speed can be calculated two-dimensionally for each pixel by the principle of radar. The relative speed information from the subject vehicle can be obtained two-dimensionally by the technique of this embodiment at the same time.

In the determination of the collision risk object illustrated in FIGS. 4 and 12, as the method of obtaining the position and relative speed of the object, there can be used a method of directly measuring the position and relative speed of the object in the millimeter wave imaging unit 102 by the technique of this embodiment, except for the method of calculating the position and relative speed of the object by the image processing described in the first to fifth embodiments. When the technique of this embodiment is used, because direct measurement is enabled, the distance and the relative speed can be obtained more precisely.

As described above, with the use of the configuration according to the ninth embodiment, since the distance and the relative velocity of the given object can be obtained more precisely, a precision of the risk prediction by the risk prediction unit 105 can be enhanced to obviate the collision accident.

### Tenth Embodiment

Hereinafter, a tenth embodiment of the present invention will be described in detail.

The tenth embodiment has the configuration of, for example, the second embodiment (FIG. 6), the third embodiment (FIG. 9), the fifth embodiment (FIG. 14), or the sixth embodiment (FIG. 15) as the vehicle collision risk prediction system 100 according to the present invention. Also, the tenth embodiment has the configuration of FIG. 30 described in the ninth embodiment as the millimeter wave imaging unit 102.

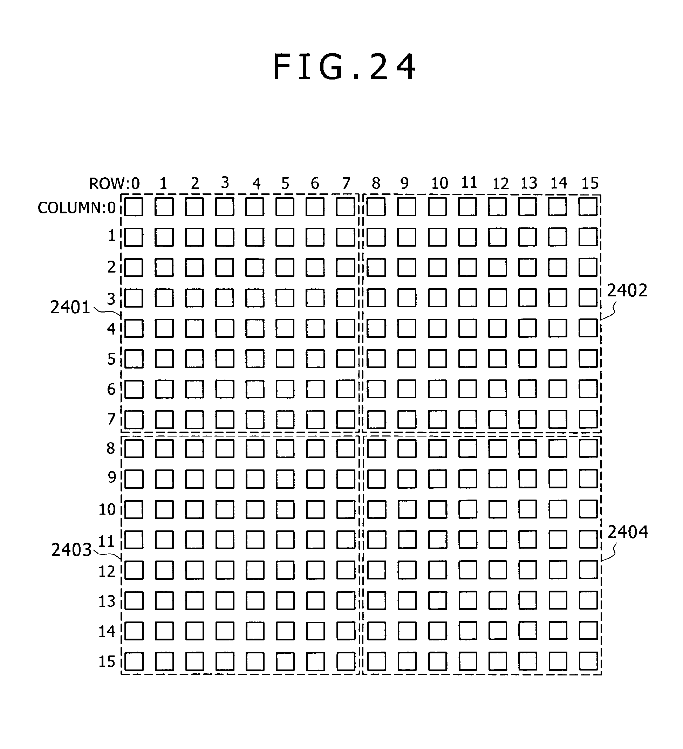

FIG. 24 is a diagram illustrating an example of positions of the pixels outputting distance information and relative speed information from the millimeter wave imaging unit according to this embodiment. In this embodiment, it is assumed that in the receive antenna (2002 to 2017) of FIG. 20, m=16, n=16, that is, 16 x 16 pixels are arranged. In FIG. 24, the 16 x 16 pixels are arranged. In this embodiment, unlike the ninth embodiment, the pixels are divided into a plurality of areas, and the pixels are read in each of the areas in the order of raster scanning. For example, in FIG. 24, pixels of 16 x 16 are arranged. In this embodiment, unlike the case of FIG. 9, the pixels are divided into the plurality of areas, and the pixels are read in each of the areas in the order of raster scanning. For example, in FIG. 24, the overall pixels are divided into four areas. In the case of FIG. 24, one area 2401 is formed in an area of (row: 0 to 7, column: 0 to 7), one area 2402 is formed in an area of (row: 0 to 7, column: 8 to 15), one area 2403 is formed in an area of (row: 8 to 15, column: 0 to 7), and one area 2404 is formed in an area of (row: 8 to 15, column: 8 to 15). Those four areas are read at the same timing as that in FIG. 22. For example, in the case of FIG. 24, four receive antennas of (0, 0), (0, 8), (8, 0), (8, 8) are selected at the same time between times T1 and T2, and the four pixels of the coordinates are read at the same time. Also, four receive antennas of (0, 1), (0, 9), (8, 1), (8, 9) are selected at the same time between times T2 and T1, and the four pixels of the coordinates are read at the same time. In this way, all of 64 x 4 = 256 pixels are read during the frame period Ta.

In order to realize the technique for reading a large number of pixels in parallel, in this embodiment, in the row circuit 2001 and the column circuit 2022 of FIG. 20, a plurality of rows and columns can be selected at the same time. Further, in the amplifiers (2018 to 2021) and the column circuit 2022, the signals received by the plurality of receive antennas can be read in parallel. For example, when four signals are read in parallel as illustrated in FIG. 23, four pixels are selected by the row circuit 2001 and the column circuit 2022 at the same time, and further the four pixels are output to the receiver circuit 3004 at the same time. In this example, the pixels are divided into four areas, but setting of the number of divisions, and the divided areas is not limited to the above configuration, but can be variously changed.

In order to process a large number of pixels in parallel, the receiver circuit 3004 and the signal processing unit 3005 in FIG. 30 can process the plurality of pixels at the same time.

As described in this embodiment, when the plurality of pixels is read in parallel at the same time, the large number of pixels can be also processed at high speed, high definition of output can be performed without lessening a frame rate.

As described above, with the use of the configuration according to the ninth embodiment, the high definition of output can be performed without lessening the frame rate. This can contribute to an improvement in the precision of the risk prediction by the risk prediction unit 105, and an improvement in the image quality when the driver confirms the image display unit 107, to thereby obviate the collision accident.

### Eleventh Embodiment

Hereinafter, an eleventh embodiment of the present invention will be described in detail.

The eleventh embodiment has the configuration of, for example, the second embodiment (FIG. 6), the third embodiment (FIG. 9), the fifth embodiment (FIG. 14), or the sixth embodiment (FIG. 15) as the vehicle collision risk prediction system 100 according to the present invention. Also, the eleventh embodiment has the configuration of FIG. 30 described in the ninth embodiment as the millimeter wave imaging unit 102.

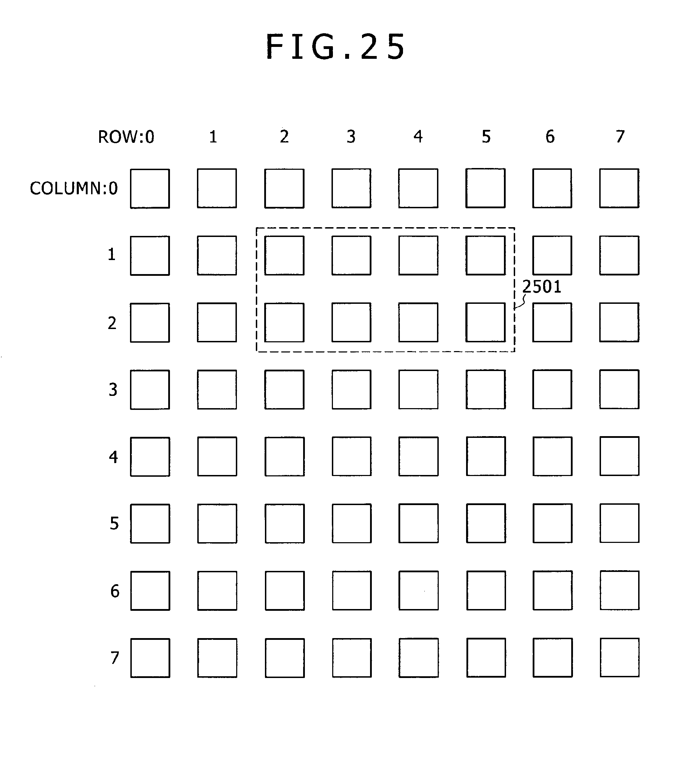

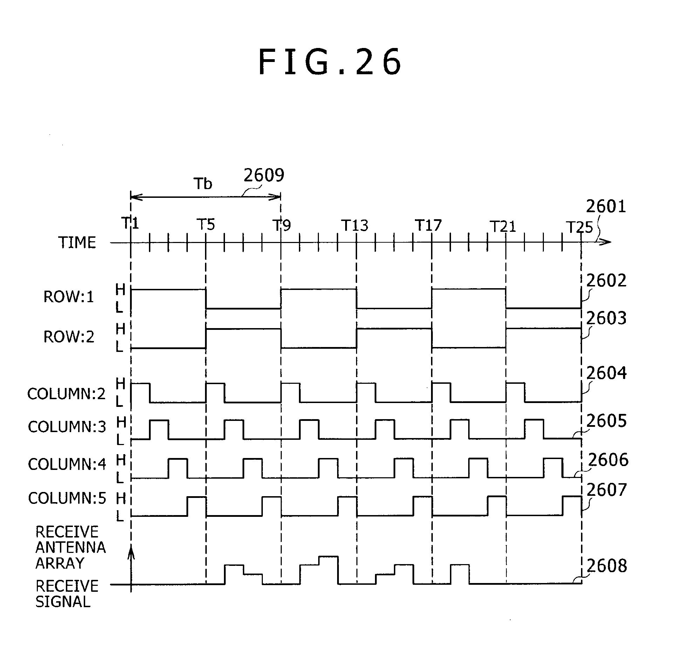

First, a technique called "fast read mode" in which the pixels can be read at a higher frame rate (shorter frame period) than that when all of the pixels are read will be described with reference to FIGS. 25 and 26.

FIG. 25 is a diagram illustrating an example of positions of the pixels outputting the distance information and the relative speed information from the millimeter wave imaging unit. FIG. 25 illustrates an example in which the receive antenna array 3003 is configured by using 64 receive antennas of m=8, n=8, that is, 8x8. In this case, only 2 x 4 pixels within an arbitrary area (intended area) 2501 surrounded by a dotted line in FIG. 25 are output in the order of raster scanning.

FIG. 26 is a diagram illustrating an operation timing of the row circuit and the column circuit when only the area 2501 of 2 × 4 pixels illustrated in FIG. 25 is output. Only two row select signals of rows 1 to 2 are periodically selected from eight row select signals input to the row circuit 2001. Also, only four column select signals of columns 2 to 5 are periodically selected from eight column select signals input to the column circuit 2022. All of the other row select signals and the other column select signals are set to "L" (unselected).

In this way, a set of outputs of all 2 x 4 pixels are completed from the times T1 to T9. In the case of FIG. 26, pixels other than the 2 x 4 pixels are omitted, and the frame period does not take any more time than Tb 2609. That is, only a specific pixel area is read by the technique of this embodiment so that the pixels can be read at the higher frame rate (shorter frame period) than that when all of the pixels are read as illustrated in FIG. 22 of the ninth embodiment (fast read mode). As described above, if the fast read mode in this embodiment is used, the specific area of the image can be read at the higher frame rate. This can contribute to an improvement in the recognition precision of the object in the first detection unit 103, an improvement in the precision of the risk prediction by the risk prediction unit 105, and an improvement in the image quality and a response speed when the driver confirms the image display unit 107, to thereby obviate the collision accident. The intended area is not limited to one area, but a plurality of areas may be arbitrarily set.

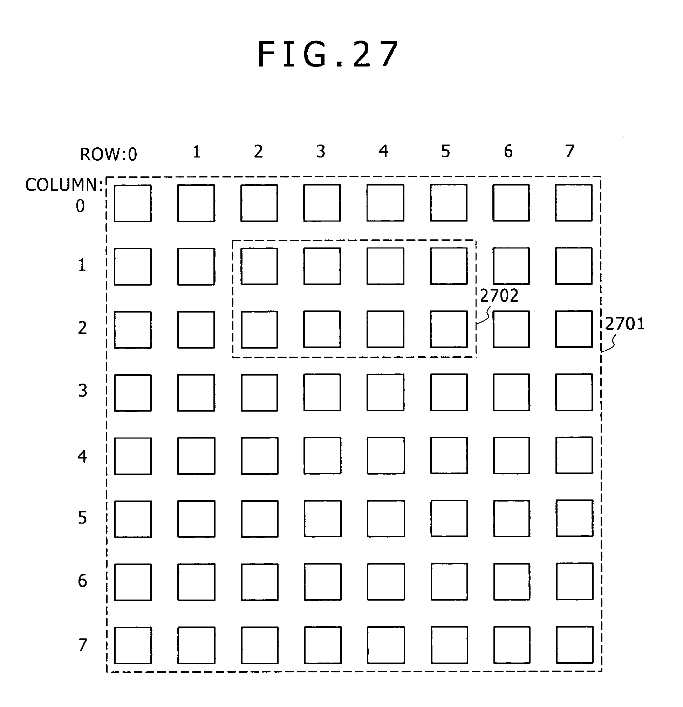

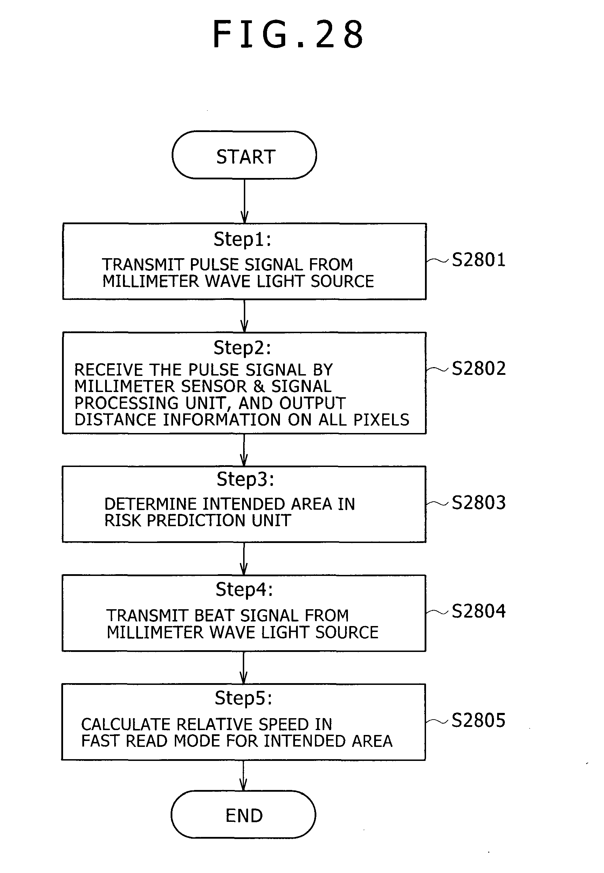

Subsequently, a description will be given of a technique called "gradual distance and relative speed calculation" in which an area for calculating the distance information and the speed information is gradually narrowed so that the collision risk object can be detected at higher speed than that when both of the position and the relative speed are measured for all of the pixels, with reference to FIGS. 27 and 28.

FIG. 27 is a diagram illustrating an example of positions of pixels outputting distance information and relative speed information from the millimeter wave imaging unit. In FIG. 27, the distance information is calculated for an overall area 2701. On the other hand, the relative speed information is calculated for only an area (intended area) 2702 obtained by narrowing an area in which the risk object may be potentially present by the aid of the distance information. Hereinafter, this technique is called "gradual distance and relative speed calculation".

FIG. 28 is a flowchart illustrating a procedure of calculating the gradual distance and relative speed calculation. As illustrated in the flowchart, a pulse signal is transmitted from the millimeter wave light source in Step 1 (S2801), the pulse signal is received and processed by the millimeter wave sensor and signal processing unit in Step 2, and the distance information is calculated for all of the pixels (S2802). Then, in Step 3, the risk prediction unit 105 determines an area (intended area) closer by a given distance or more on the basis of the distance information (S2803). Further, in Step 4, a beat signal is transmitted from the millimeter wave light source (S2804). The relative speed is calculated for only the intended area in the fast read mode described in the eleventh embodiment in Step 5 (S2805).

As compared with ranging by using the pulse signal used in Steps 1 and 2, the transmission of the beat signal used in Steps 3 and 4 requires much time for measurement because there is a need to transmit a plurality of frequencies and receive the plurality of frequencies. In the gradual distance and relative speed calculation according to this embodiment, a distance to the overall image is measured in Steps 1 and 2. Then, the pixel area in which the object having a risk of collision is highly potentially hidden is estimated in Step 3, and the relative speed is measured for only the estimated pixel area in Steps 4 and 5. With this process, the collision risk object can be detected at higher speed than that when both of the position and relative speed are measured for all of the pixels.

As described above, with the use of the gradual distance and relative speed calculation according to this embodiment, the collision risk object can be detected at higher speed than that when both of the position and relative speed are measured for all of the pixels. This can contribute to an improvement in the recognition precision of the object in the first detection unit 103, an improvement in the precision of the risk prediction by the risk prediction unit 105, and an improvement in the image quality and the response speed when the driver confirms the image display unit 107, to thereby obviate the collision accident.

### Twelfth Embodiment

Hereinafter, a twelfth embodiment of the present invention will be described in detail.

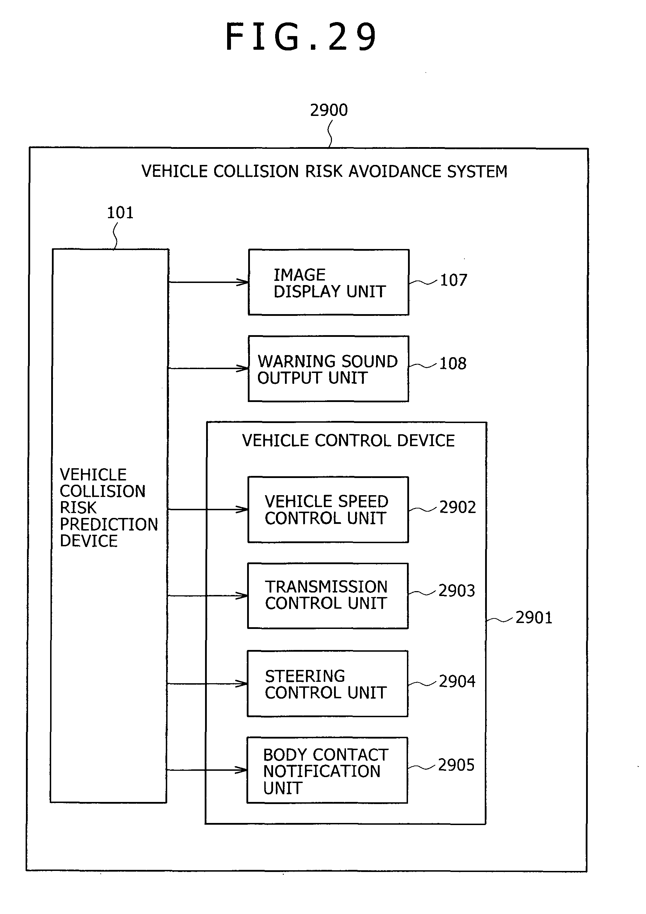

FIG. 29 is a configuration diagram illustrating a vehicle collision risk avoidance system 2900 according to the twelfth of the present invention. The vehicle collision risk avoidance system 2900 in FIG. 29 is identical with the vehicle collision risk avoidance system 1600 in FIG. 16 of the seventh and eighth embodiments.

The vehicle collision risk avoidance system 2900 appropriately includes the vehicle collision risk prediction apparatus 101, the image display unit 107, the warning sound output unit 108, and a vehicle control unit 2901. The vehicle control unit 2901 is identical with the vehicle control unit 1601 in FIG. 16 of the ninth and eleventh embodiments. The vehicle control unit 2901 appropriately includes a vehicle control unit 2902, a transmission unit 2903, a steering control unit 2904, and a body contact notification unit 2905.

The vehicle collision risk prediction apparatus is identical with the vehicle collision risk prediction apparatus 101 in FIG. 16 of the ninth and tenth embodiments. That is, the vehicle collision risk prediction apparatus detects the object having a risk of collision, and the vehicle collision risk prediction apparatus 101 outputs "collision avoidance information" indicative of how the vehicle takes the collision avoidance action, which is obtained in the risk prediction unit, to the vehicle control unit 2901. The image display unit 107 is identical with the image display unit 107 in FIG. 16 of the ninth and tenth embodiments, displays the collision risk object on a screen, and notifies the driver of the collision risk object. The warning sound output unit 108 is identical with the image display unit 107 in FIG. 16 of the ninth and tenth embodiments, and outputs a warning sound such as an alarm sound or a synthetic sound for the object having a risk of collision detected by the vehicle collision risk prediction apparatus 101 to notify the driver of the object.

The vehicle control unit 2902 automatically decelerates the subject vehicle by braking on the basis of the "collision avoidance information" output from the vehicle collision risk prediction apparatus 101, and avoids the risk of collision. In this case, the "collision avoidance information" output from the vehicle collision risk prediction apparatus 101 to the vehicle control unit 2902 includes, for example, information indicative of the intensity and timing of braking.

The transmission unit 2903 shifts down, reduces the speed by an engine brake, and avoids the risk of collision, on the basis of "collision avoidance information" output from the vehicle collision risk prediction apparatus 101. In this situation, the "collision avoidance information" output from the vehicle collision risk prediction apparatus 101 to the transmission unit 2903 includes information indicative of timing for shifting gears.

The steering control unit 2904 turns the steering wheel in a direction opposite to the collision risk object on the basis of the "collision avoidance information" output from the vehicle collision risk prediction apparatus 101 to avoid the collision.

The body contact notification unit 2905 controls a site that comes into contact with a body of the driver, and notifies the driver of the risk by a method of changing the tightness of a seat belt, or vibrating a seat on the basis of the "collision avoidance information" output from the vehicle collision risk prediction apparatus 101. In this case, the "collision avoidance information" output from the vehicle collision risk prediction apparatus 101 to the body contact notification unit 2905 includes information indicative of the degree of changing the tightness of the seat belt, the degree of oscillating the seat, and a timing at which the tightness of the seat belt or the vibration of the seat is changed.

In the collision avoidance action, only a part of elements within a vehicle control device may be controlled, or all of the elements may be controlled at the same time. For example, there are cases in which only the vehicle control unit 2902 is used, two elements of the vehicle control unit 2902 and the transmission unit 2903 are used together, three elements of the vehicle control unit 2902, the transmission unit 2903, and the steering control unit 2904 are used together, and all of four elements of the vehicle control unit 2902, the transmission unit 2903, the steering control unit 2904, and the body contact notification unit 2905 are used together. Also, the collision avoidance action may be implemented when the collision avoidance action has not been conducted even if a given time has been elapsed after the driver has been notified of the warning by the screen display of the collision risk object or the output of the warning source such as the alarm sound or the synthetic sound. Also, a timing of starting the collision avoidance action may be changed according to the level of risk. For example, if it is determined on the basis of the obtained distance information that the distance to the collision risk object is short, and the level of risk is high, a given time from a notification of warning to the driver to the avoidance operation start may be shortened, or the avoidance operation may start together with the notification. Whether the collision risk avoidance action has been conducted, or not, is monitored by, for example, a vehicle speed monitoring unit, a transmission monitoring unit, or a steering monitoring unit, and whether a necessary action such as a reduction in the vehicle speed is detected, or not, may be checked.

If the number of elements to be used is small among the four elements (vehicle control unit 2902, transmission unit 2903, steering control unit 2904, and body contact notification unit 2905) within the vehicle control unit 2901 in FIG. 29, the driver per se can use the vehicle collision risk avoidance system 2900 as an auxiliary for taking the avoidance action. In this case, since the control method of the vehicle control unit 2901 is easily tuned, a load when the control method is designed is reduced. Conversely, if the number of elements to be used is larger, the driver can take the collision avoidance action regardless of the driving technique of the driver.

As described above, with the use of the configuration according to the twelfth embodiment, as in the seventh and eighth embodiments, the driver can be warned about the collision risk objects present behind the obstruction by the image and the sound, and can properly take the collision avoidance action. As a result, the collision accident can be obviated. Also, with the use of the configuration according to the seventh embodiment, even if the driver does not take the collision avoidance action, since the subject vehicle automatically takes the collision avoidance action, the collision accident can be obviated. The configuration of the twelfth embodiment can be applied in appropriate combination with the configurations described in the other embodiments.

The present invention is not limited to the above-mentioned embodiments, but includes various modified examples. For example, the above-mentioned embodiments are described in detail for the purpose of facilitating understanding of the present invention, and the present invention does not always include all of the configurations described above. Also, a part of the configuration of one embodiment can be replaced with the configuration of another embodiment. Also, in a part of the configurations of the respective embodiments, another configuration can be added, deleted, or replaced.

Also, parts or all of the above-mentioned respective configurations may be configured by hardware, or may be realized by causing a processor to execute programs.

Also, the control lines and the information lines necessary for description are illustrated, and all of the control lines and the information lines necessary for products are not always illustrated. In fact, it may be conceivable that most of the configurations are connected to each other.

## Claims

1. A vehicle risk prediction apparatus comprising:
a first imaging unit that detects an electromagnetic wave of a wavelength ranging from a millimeter wave to a submillimeter wave to output a first image;
a first detection unit that processes the first image output from the first imaging unit to detect a given object; and
a risk prediction unit that outputs detection result of the given object detected by the first detection unit,
wherein the first imaging unit includes:
a transmit antenna unit that radiates the electromagnetic wave of the wavelength ranging from the millimeter wave to the submillimeter wave;
a receive antenna array unit that has a plurality of receive antenna units arranged two-dimensionally, and receives a reflected wave of the electromagnetic wave radiated by the transmit antenna unit from the given object; and
a signal processing unit that measures a time from radiation of the electromagnetic wave by the transmit antenna unit to reception of the reflected wave by the receive antenna array unit according to the number of read frames by the receive antenna array, and calculates both or any one of a distance from the subject vehicle to the given object, and a relative speed between the subject speed and the given object.

2. The vehicle risk prediction apparatus according to claim 1,
wherein the signal processing unit further calculates a place of the given object on the basis of two-dimensional positions of the respective receive antenna units of the receive antenna array, which receive the reflected wave.

3. The vehicle risk prediction apparatus according to claim 1 or 2,
wherein the receive antenna array unit is divided into a plurality of areas, and outputs a signal in parallel for each of the divided areas.

4. The vehicle risk prediction apparatus according to claim 1 or 2,
wherein the first imaging unit has a mode of reading all of receive signals of the plurality of receive antenna units two-dimensionally arranged in the receive antenna array unit, and a mode of selectively reading a part of the receive signals of the plurality of receive antenna units.

5. The vehicle risk prediction apparatus according to any one of claims 1 to 4, further comprising:
a second imaging unit that detects an electromagnetic wave of a wavelength ranging from an ultraviolet band to a near-infrared band to output a second image; and
a second detection unit that detects a given object from the second image through image processing, independent from the first detection unit,
wherein the risk prediction unit allocates the level of risk to each object, with the use of a matching processing result obtained by conducting object matching processing on the given object detected by the first detection unit and the given object detected by the second detection unit, and both or any one of the distance from the subject vehicle to the given object, and the relative speed between the subject vehicle and the given object, and changes a warning sound or an image to be output according to the level of risk.
